# EUROPEAN PATENT APPLICATION

(11) **EP 4 831 252 A1**
(43) Date of publication of application: **28.10.2026**
(21) Application number: 26174141.7
(22) Date of filing: 23.04.2026
(51) Int. Cl.: C09D 11/322, C09D 11/326, C09D 17/00

(54) **METHOD FOR PRODUCING PIGMENT DISPERSION AND METHOD FOR PRODUCING INK**

(30) Priority: 24.04.2025 JP 2025072302
(71) Applicant: Konica Minolta, Inc., Tokyo 100-7015 (JP)
(72) Inventor: SUZUKI, Yoshihito, Tokyo, 100-7015 (JP); HAYASHI, Kenji, Tokyo, 100-7015 (JP)
(74) Representative: MFG Patentanwälte Meyer-Wildhagen Meggle-Freund Gerhard PartG mbB

(57) **Abstract**

A method for producing a pigment dispersion includes: a pigment dispersing step (S01) of mixing at least a pigment, a dispersant, and water and dispersing the pigment to obtain a pigment dispersion liquid; a crosslinking raw material mixture preparation step (S02) of: preparing a crosslinking raw material mixture by mixing at least the pigment dispersion liquid and a crosslinking agent and, when the pigment dispersion liquid does not contain an organic solvent; further mixing the organic solvent, and a crosslinking step (S03) of heating the mixture to crosslink the dispersant. The dispersant has an acid value of 100 to 250 mg KOH/g and a degree of neutralization of 25% to 75%, a content of the organic solvent in the mixture is 10 mass % to 40 mass %, and 90 mass % or more of the total organic solvent has an HSP value δ of 30 to 32.

## Description

### BACKGROUND OF THE INVENTION

### TECHNICAL FIELD

The present disclosure relates to a method for producing a pigment dispersion and a method for producing an ink. More specifically, the present disclosure relates to a method for producing a pigment dispersion having good storage stability, and to a method for producing an ink having good color developability, storage stability, ejectability, and coating film durability.

### DESCRIPTION OF RELATED ART

An inkjet recording method has been applied to various printing fields, including photography, various types of printing, marking, and special printing such as color filters, because an image can be produced easily and inexpensively. In particular, since digital printing can be performed without using a printing plate, the inkjet recording method is particularly suitable for applications in which various images are formed in small lots.

The ink used in the inkjet recording method preferably has excellent storage stability, redispersibility, and the like, for example, in order to improve the ejectability of an inkjet head that ejects the ink. Further, it is desirable that the ink be excellent in color developability and coating film durability. In the related art, inks intended to improve such storage stability and the like have been proposed (for example, see Japanese Unexamined Patent Application Publication No. 2023-155270, Japanese Unexamined Patent Application Publication No. 2014-136777, and, JP2015501201 (A)).

### SUMMARY OF THE INVENTION

Japanese Unexamined Patent Application Publication No. 2023-155270 describes an aqueous pigment dispersion comprising a pigment, a pigment-dispersing resin, and an aqueous medium. The aqueous pigment dispersion can be obtained by reacting raw materials containing a pigment-dispersing resin having a carboxyl group and a compound having an epoxy group. In the reaction between a carboxyl group and an epoxy group, an unneutralized carboxyl group having an active hydrogen has higher reactivity than a carboxyl group neutralized with an alkaline compound. However, in the aqueous pigment dispersion, because the degree of neutralization of the compound having a carboxyl group is high, the reaction between the compound having a carboxyl group and the compound having an epoxy group was not necessarily sufficient. Accordingly, when used as a raw material for an inkjet ink, there remained room for improvement in storage stability, ejectability, and the like. In addition, as an organic solvent used in crosslinking the pigment-dispersing resin, the obtained aqueous pigment dispersion did not contain a sufficient amount of an organic solvent having an HSP value δ that improves storage stability, ejectability, and the like when the obtained aqueous pigment dispersion is used as a raw material for an inkjet ink.

Japanese Unexamined Patent Application Publication No. 2014-136777 describes a method for producing an aqueous pigment dispersion liquid, the method including adding a water-soluble solvent and a crosslinking agent to a kneaded product containing a pigment, a resin having an alkylene oxide group and a carboxyl group, a basic compound, a water-soluble organic solvent, and the like, thereby crosslinking the resin. In this production method, the resin has a high degree of neutralization, and diethylene glycol or ethanol having a low HSP value δ is used as a solvent in the crosslinking step; therefore, there has been room for improvement in the storage stability, ejectability, redispersibility, and the like of the aqueous pigment dispersion liquid or the ink.

JP2015501201 (A) describes a dispersion comprising a pigment, a liquid medium, and a dispersant, and states that the dispersant may be crosslinked. Since a highly hydrophobic solvent is added to the dispersion when crosslinking the dispersant, there was room for improvement in the storage stability of the dispersion and in the storage stability, ejectability, and redispersibility of an ink containing the dispersion. In addition, since the dispersant has a low acid value, there remained room for further improvement in the redispersibility of the ink.

The present disclosure has been made in view of the above-described problems and circumstances. An object of the present disclosure is to provide a method for producing a pigment dispersion, the method being capable of producing a pigment dispersion having good storage stability. Further, an object of the present disclosure is to provide a method for producing an ink, the method being capable of producing an ink having good color developability, storage stability, ejectability, and coating film durability.

To achieve at least one of the above-mentioned objects, according to an aspect of the present invention, a method for producing a pigment dispersion comprises:
a pigment dispersing step (S01) of mixing at least a pigment, a dispersant, and water and dispersing the pigment to obtain a pigment dispersion liquid;
a crosslinking raw material mixture preparation step (S02) of: (i) when the pigment dispersion liquid does not contain an organic solvent, preparing a crosslinking raw material mixture by mixing at least the pigment dispersion liquid, an organic solvent, and a crosslinking agent; and (ii) when the pigment dispersion liquid contains an organic solvent, preparing a crosslinking raw material mixture by mixing at least the pigment dispersion liquid and a crosslinking agent; and
a crosslinking step (S03) of heating the crosslinking raw material mixture to crosslink the dispersant, wherein
the dispersant has an acid value of 100 to 250 mg KOH/g and a degree of neutralization of 25% to 75%,
   a content of the organic solvent in the crosslinking raw material mixture is 10 mass % to 40 mass %, and 90 mass % or more of the total organic solvent is an organic solvent having an HSP value δ of 30 to 32.

### BRIEF DESCRIPTION OF THE DRAWINGS

The advantages and features provided by one or more embodiments of the invention will become more fully understood from the following detailed description and the accompanying drawings, which are provided by way of illustration only and are not intended to define the limits of the present invention, wherein:

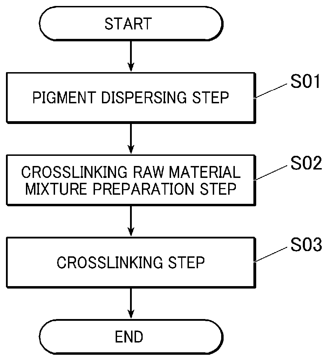

FIG. 1 is a flowchart illustrating an embodiment of a method for producing a pigment dispersion according to the present disclosure.

### DETAILED DESCRIPTION

Hereinafter, one or more embodiments of the present invention will be described with reference to the drawings. However, the scope of the invention is not limited to the disclosed embodiments.

### 1. Method for Producing a Pigment Dispersion

One embodiment of a method for producing a pigment dispersion according to the present disclosure is a method for producing a pigment dispersion, and, as shown in FIG. 1, includes a pigment dispersing step S01, a crosslinking raw material mixture preparation step S02 (here, mixture indicates mixed liquid), and a crosslinking step S03. The pigment dispersing step includes mixing at least a pigment, a dispersant, and water to disperse the pigment, thereby obtaining a pigment dispersion liquid. The crosslinking raw material mixture preparation step includes: when the pigment dispersion liquid does not contain an organic solvent, preparing a crosslinking raw material mixture by mixing at least the pigment dispersion liquid, an organic solvent, and a crosslinking agent; and when the pigment dispersion liquid contains an organic solvent, preparing a crosslinking raw material mixture by mixing at least the pigment dispersion liquid and a crosslinking agent. The crosslinking step is a step of heating the crosslinking raw material mixture to crosslink the dispersant. The dispersant has an acid value of 100 to 250 mg KOH/g and a degree of neutralization of 25 to 75%. The content of the organic solvent in the crosslinking raw material mixture is 10 to 40 mass %. The 90 mass % or more of the total organic solvent is an organic solvent having an HSP value δ of 30 to 32. FIG. 1 is a flowchart illustrating an embodiment of a method for producing a pigment dispersion according to the present disclosure.

### 1-1. pigment dispersing step

### 1-1-1. Mixing Operation

The pigment dispersing step is a step of mixing at least "a pigment, a dispersant, and water" to prepare a pigment dispersion liquid. The method of mixing the pigment, the dispersant, and the like is not particularly limited; however, for example, the pigment, the dispersant, and the like are preferably mixed while being dispersed using a disperser. As the disperser, a conventionally known ball mill, sand mill, line mill, high-pressure homogenizer, or the like can be used. In particular, dispersing the pigment using a sand mill is preferable because the particle size distribution becomes sharper (i.e., narrower). In addition, the material of the beads used for sand-mill dispersion is not particularly limited, but zirconia or zircon is preferable from the viewpoint of preventing generation of bead fragments and contamination with ionic components. Further, the beads preferably have an average particle diameter of 0.1 to 3 mm. The temperature during mixing with dispersion is not particularly limited, but is preferably 15 to 45 °C. Alternatively, a dispersant and water may be mixed to prepare a dispersant solution, and a pigment may be mixed with the dispersant solution to prepare a pigment dispersion liquid. In preparing the dispersant solution, a compound having an acidic group, an alkaline compound, and water may be mixed to obtain a dispersant solution containing the dispersant and water.

### 1-1-2. pigment dispersion liquid

The pigment dispersion liquid contains at least a pigment, a dispersant, and water. The pigment dispersion liquid may further contain an organic solvent or the like, in addition to the pigment, the dispersant, and water. When the pigment dispersion liquid contains an organic solvent, the pigment can be dispersed more effectively in the mixing operation described above. When the pigment dispersion liquid contains an organic solvent, the content of the organic solvent is preferably 10 to 60 mass % and more preferably 20 to 50 mass %, based on the total amount of the pigment dispersion liquid. By setting the content of the organic solvent within such a range, the pigment can be dispersed more satisfactorily. Note that, in the crosslinking step, the organic solvent needs to be present in a specified amount. Therefore, it is necessary to prevent the pigment dispersion liquid from containing an amount of the organic solvent that would exceed the specified content in the crosslinking step. Note that the concentrations of the organic solvent and water in the crosslinking step are prepared in a crosslinking raw material mixture preparation step.

### 1-1-3. Dispersant

In the method for producing a pigment dispersion according to the present embodiment, the dispersant is a compound obtained by neutralizing, with a compound exhibiting alkalinity, a compound having an acidic group in its molecule such that a specified degree of neutralization is achieved. The compound having an acidic group in the above-described molecule is preferably a polymer having an acidic group in the molecule. Further, the polymer having an acidic group in the molecule is preferably a polymer having a carboxyl group in the molecule. The acidic group in the above "compound having an acidic group in the molecule" is in an unneutralized form.

### (degree of neutralization)

In the method for producing a pigment dispersion according to the present embodiment, the dispersant is a compound obtained by neutralizing, to a specified degree of neutralization, a compound having an acidic group in the molecule with an alkaline compound, as described above. The dispersant is preferably a compound having a carboxyl group as the acidic group. An acidic group is a group exhibiting acidity, such as a carboxyl group. The degree of neutralization of the dispersant is 25% to 75%, preferably 35% to 65%, and more preferably 45% to 55%. Because the degree of neutralization of the dispersant is within such a range, an appropriate amount of unneutralized acidic groups remains, and, by reaction between the unneutralized acidic groups and a crosslinking agent, a crosslinked dispersant is formed so as to cover the surface of the pigment, thereby improving pigment dispersibility. When the acidic group of the dispersant is a carboxyl group and the crosslinking agent is a compound having two or more epoxy groups in the molecule, the above-described effect is particularly pronounced. The degree of neutralization is expressed as a ratio of neutralized acidic groups to all acidic groups contained in the dispersant. When all acidic groups contained in the dispersant are neutralized, the degree of neutralization is 100%.

A crosslinking agent, such as a compound having two or more epoxy groups in the molecule, has higher reactivity with the unneutralized acidic group than with the neutralized "acidic group such as a carboxyl group". In addition, a dispersant having a large number of unneutralized acidic groups has low solubility in an aqueous medium, and thus the dispersibility of the pigment in the obtained pigment dispersion is low. In addition, a dispersant having a large number of neutralized acidic groups has high water solubility, and thus the water resistance of the pigment in the obtained pigment dispersion decreases. In addition, when the dispersant covering the entire surface of the pigment is crosslinked by a crosslinking agent, the entire surface of the pigment is covered with the dispersant in a state in which molecules of the dispersant are crosslinked to each other, thereby suppressing detachment of the dispersant from the pigment surface. It is presumed that, because the dispersant covering the pigment surface forms a crosslinked network structure by a crosslinking agent on the pigment surface, the dispersant constituting the network is less likely to detach from the pigment surface. As a result, good pigment dispersibility can be maintained over a long period of time. In addition, the resulting pigment dispersion has improved storage stability and pigment dispersibility, and an ink containing the pigment dispersion has improved color developability, storage stability, ejectability, redispersibility, and the like.

When the degree of neutralization of the dispersant is lower than 25%, the amount of unneutralized acidic groups is excessively large, resulting in low solubility in an aqueous medium and thus low pigment dispersibility in the resulting pigment dispersion, which is undesirable. When the degree of neutralization of the dispersant is higher than 75%, the amount of acidic groups (e.g., carboxyl groups) serving as reaction sites with the crosslinking agent is excessively small; thus, the dispersant is not sufficiently crosslinked, and the storage stability, pigment dispersibility, ejectability, redispersibility, and the like of the resulting pigment dispersion deteriorate, which is not preferable. In addition, when the degree of neutralization of the dispersant is higher than 75%, water solubility increases, and thus water resistance of the pigment in the resulting pigment dispersion decreases, which is not preferable.

### (acid value)

In the method for producing a pigment dispersion according to the present embodiment, the dispersant has an acid value of 100 to 250 mg KOH/g, preferably 150 to 250 mg KOH/g, and more preferably 200 to 250 mg KOH/g. Because the acid value of the dispersant is within such a range, the resulting pigment dispersion is excellent in solubility of the pigment in an aqueous medium, pigment dispersibility, redispersibility, and water resistance. The acid value of the dispersant is determined by the number of acidic groups, such as carboxyl groups, contained in the dispersant (including both neutralized and unneutralized groups).

In the method for producing a pigment dispersion according to the present embodiment, since the degree of neutralization of the dispersant is 25% to 75%, the dispersant contains a certain amount of unneutralized acidic groups. Accordingly, the solubility of the dispersant in an aqueous medium tends to decrease, and the dispersibility of the pigment tends to decrease. In contrast, in the method for producing a pigment dispersion according to the present embodiment, the acid value of the dispersant is set to be high in order to improve the solubility of the dispersant in the aqueous medium and enhance the dispersibility of the pigment. On the other hand, when the acid value of the dispersant is excessively high, the water solubility of the dispersant becomes excessively high, and the adsorbability of the dispersant onto the pigment decreases. Accordingly, when the acid value of the dispersant is excessively high, the amount of the dispersant adsorbed on the pigment surface decreases, and the dispersibility of the pigment and the storage stability of the resulting pigment dispersion decrease. Furthermore, when the acid value of the dispersant is excessively high, the water solubility of the dispersant becomes excessively high, and thus the water resistance of the pigment in the resulting pigment dispersion decreases. In addition, as the acid value of the dispersant increases, the water solubility of the dispersant increases, thereby improving the redispersibility of the resulting pigment dispersion.

In the method for producing a pigment dispersion according to the present embodiment, when the acid value of the dispersant is less than 100 mg KOH/g, the solubility of the pigment in an aqueous medium is low, which is not preferable. If the acid value of the dispersant is higher than 250 mg KOH/g, the water solubility of the dispersant becomes excessively high. Therefore, the dispersibility of the pigment and the storage stability of the resulting pigment dispersion decrease, which is undesirable. When the acid value of the dispersant is higher than 250 mg KOH/g, the water solubility of the dispersant becomes excessively high, and the water resistance of the pigment in the obtained pigment dispersion decreases, which is undesirable.

Examples of the dispersant include vinyl-based polymers, polyurethanes, and polyesters. Among these, vinyl-based polymers are preferred as the dispersant. The vinyl-based polymer is preferably an addition polymerization product of a vinyl-based monomer. Preferably, the vinyl-based monomer includes a vinyl-based monomer having an acidic group. Examples of the vinyl-based monomer having an acidic group include acrylic acid, methacrylic acid, crotonic acid, fumaric acid, maleic acid, itaconic acid, and citraconic acid. Two or more of these may be used for polymerization. Examples of vinyl-based monomers other than vinyl-based monomers having an acidic group include styrene-based monomers such as styrene and α-methylstyrene. It is preferable to polymerize these vinyl-based monomers after mixing them with a vinyl-based monomer having an acidic group.

### (Manufacturing Method)

The method for producing the dispersant is not particularly limited, and the dispersant may be produced by any known method. For example, in the case of a vinyl-based polymer, a vinyl-based monomer having an acidic group such as acrylic acid and a styrene-based monomer are mixed, and a chain transfer agent and a radical polymerization initiator are added to prepare a reaction mixture. The polymerization reaction may be a redox polymerization in which a peroxide and a reducing agent are combined. As the polymerization initiator, any known polymerization initiator used for polymerizing a vinyl-based monomer may be used. The reaction mixture is then heat-polymerized under a nitrogen atmosphere to produce a compound having an acidic group. A dispersant may then be obtained by neutralizing the compound having an acidic group to a predetermined degree of neutralization. The acid value of the dispersant may be adjusted, for example, by the compounding amount of a vinyl-based monomer having an acidic group such as acrylic acid. The alkaline compound used for neutralization is not particularly limited, and may include, for example, sodium hydroxide and potassium hydroxide. As the dispersant, a commercially available dispersant may be used. Examples include XJ-110, XJ-120, and XJ-290. XJ-110 is an acrylic pigment-dispersing resin manufactured by Seiko PMC Corporation, and has an acid value of 110 mg KOH/g. XJ-120 is an acrylic pigment-dispersing resin manufactured by Seiko PMC Corporation, and has an acid value of 190 mg KOH/g. XJ-290 is an acrylic pigment-dispersing resin manufactured by Seiko PMC Corporation, and has an acid value of 200 mg KOH/g.

The content of the dispersant in the pigment dispersion liquid is preferably 10 to 100 parts by mass, and more preferably 10 to 40 parts by mass, per 100 parts by mass of the pigment. By setting the content of the dispersant in the pigment dispersion liquid within such a range, the above-described effects of the dispersant can be obtained more effectively.

### 1-1-4. Pigment

In the method for producing a pigment dispersion according to the present embodiment, the pigment contained in the pigment dispersion liquid is not particularly limited, and a known pigment may be used. Examples of the pigment that may be preferably used include organic pigments such as insoluble pigments and lake pigments, and inorganic pigments such as titanium dioxide. The content of the pigment in the pigment dispersion liquid is preferably 10 to 60 mass %, and more preferably 15 to 55 mass %, based on the total mass of the pigment dispersion liquid.

Titanium dioxide has three crystalline forms, i.e., anatase, rutile, and brookite, but titanium dioxide for general use can be broadly classified into anatase and rutile. Although not particularly limited, a rutile type having a high refractive index and high hiding power is preferred. Specific examples include the TR series manufactured by Fuji Titanium Industry Co., Ltd., the JR series manufactured by Tayca Corporation, and TIPAQUE manufactured by Ishihara Sangyo Kaisha, Ltd.

The insoluble pigment is not particularly limited; however, preferred examples include azo pigments, azomethine pigments, methine pigments, diphenylmethane pigments, triphenylmethane pigments, quinacridone pigments, anthraquinone pigments, perylene pigments, indigo pigments, quinophthalone pigments, isoindolinone pigments, isoindoline pigments, azine pigments, oxazine pigments, thiazine pigments, dioxazine pigments, thiazole pigments, phthalocyanine pigments, and diketopyrrolopyrrole pigments.

Examples of the organic pigments include the following pigments.

Examples of pigments for magenta or red include C.I. Pigment Red 2, C.I. Pigment Red 3, C.I. Pigment Red 5, C.I. Pigment Red 6, C.I. Pigment Red 7, C.I. Pigment Red 15, C.I. Pigment Red 16, C.I. Pigment Red 48: 1, C.I. Pigment Red 53: 1, C.I. Pigment Red 57: 1, C.I. Pigment Red 122, C.I. Pigment Red 123, C.I. Pigment Red 139, C.I. Pigment Red 144, C.I. Pigment Red 149, C.I. Pigment Red 166, C.I. Pigment Red 177, C.I. Pigment Red 178, C.I. Pigment Red 202, C.I. Pigment Red 222, C.I. Pigment Red 254, C.I. Pigment Red 269, C.I. Pigment Violet 19, and the like. Further, a mixed-crystal pigment, such as a mixed-crystal pigment of C.I. Pigment Red 122 and C.I. Pigment Violet 19, can also be used.

Examples of pigments for orange or yellow include C.I. Pigment Orange 31, C.I. Pigment Orange 43, C.I. Pigment Yellow 12, C.I. Pigment Yellow 13, C.I. Pigment Yellow 14, C.I. Pigment Yellow 17, C.I. Pigment Yellow 74, C.I. Pigment Yellow 93, C.I. Pigment Yellow 128, C.I. Pigment Yellow 94, C.I. Pigment Yellow 138, C.I. Pigment Yellow 155, and the like. In particular, C.I. Pigment Yellow 155 is preferred in terms of the balance between color hue and lightfastness.

Examples of pigments for green or cyan include C.I. Pigment Blue 15, C.I. Pigment Blue 15:2, C.I. Pigment Blue 15:3, C.I. Pigment Blue 16, C.I. Pigment Blue 60, and C.I. Pigment Green 7.

Examples of pigments for black include C.I. Pigment Black 1, C.I. Pigment Black 6, and C.I. Pigment Black 7.

### 1-1-5. Water

The water is not particularly limited, and examples thereof include deionized water and distilled water. The content of water in the pigment dispersion liquid is preferably 10 to 90 mass %, and more preferably 30 to 90 mass %, based on the total amount of the pigment dispersion liquid.

### 1-1-6. Other Additives

In addition to the above, the pigment dispersion liquid may contain, as other additives, a surfactant, an antifoaming agent, a preservative, and the like.

### 1-2. crosslinking raw material mixture preparation step

### 1-2-1. Mixing Step

The crosslinking raw material mixture preparation step is a step of "preparing a crosslinking raw material mixture by mixing at least a pigment dispersion liquid, an organic solvent, and a crosslinking agent" when the pigment dispersion liquid does not contain an organic solvent, and "preparing a crosslinking raw material mixture by mixing at least a pigment dispersion liquid and a crosslinking agent" when the pigment dispersion liquid contains an organic solvent. As described above, the crosslinking raw material mixture contains at least a pigment, a dispersant, a crosslinking agent, an organic solvent, and water. Among these, the pigment, the dispersant, and water are always included in the pigment dispersion liquid. The crosslinking agent is always added in the crosslinking raw material mixture preparation step. The organic solvent may be added to the pigment dispersion liquid in the pigment dispersing step and not added to the crosslinking raw material mixture in the crosslinking raw material mixture preparation step. Alternatively, the organic solvent may be added to the pigment dispersion liquid in the pigment dispersing step and may further be added to the crosslinking raw material mixture in the crosslinking raw material mixture preparation step. Alternatively, the organic solvent may not be added to the pigment dispersion liquid in the pigment dispersing step but may be added to the crosslinking raw material mixture in the crosslinking raw material mixture preparation step. Accordingly, the method for producing a pigment dispersion of the present disclosure includes the following three embodiments.

The first is "A method for producing a pigment dispersion, the method comprising: a pigment dispersing step of mixing at least a pigment, a dispersant, and water and dispersing the pigment without mixing an organic solvent to obtain an pigment dispersion liquid without organic solvent; a crosslinking raw material mixture preparation step of mixing at least the pigment dispersion liquid, an organic solvent, and a crosslinking agent to prepare a crosslinking raw material mixture (a liquid mixture); and a crosslinking step of heating the crosslinking raw material mixture to crosslink the dispersant, wherein the dispersant has an acid value of 100 to 250 mg KOH/g and a degree of neutralization of 25 to 75%, a content of the organic solvent in the crosslinking raw material mixture is 10 to 40 mass %, and 90 mass % or more of the total organic solvent is an organic solvent having an HSP value δ of 30 to 32.".

The second aspect is "a method for producing a pigment dispersion, the method comprising: a pigment dispersing step of mixing at least a pigment, a dispersant, water, and an organic solvent and dispersing the pigment to obtain a pigment dispersion liquid; a crosslinking raw material mixture preparation step of mixing at least the pigment dispersion liquid and a crosslinking agent and preparing a crosslinking raw material mixture without additionally mixing an organic solvent; and a crosslinking step of heating the crosslinking raw material mixture to crosslink the dispersant, wherein the dispersant has an acid value of 100 to 250 mg KOH/g and a degree of neutralization of 25% to 75%, a content of the organic solvent in the crosslinking raw material mixture is 10 to 40 mass %, and 90 mass % or more, relative to the total organic solvent, is an organic solvent having an HSP value δ of 30 to 32.".

A third aspect is "a method for producing a pigment dispersion, the method comprising: a pigment dispersing step of mixing at least a pigment, a dispersant, water, and an organic solvent and dispersing the pigment to obtain a pigment dispersion liquid; a crosslinking raw material mixture preparation step of mixing at least the pigment dispersion liquid, an organic solvent, and a crosslinking agent to prepare a crosslinking raw material mixture (a liquid mixture; hereinafter, the 'crosslinking raw material mixture'); and a crosslinking step of heating the crosslinking raw material mixture to crosslink the dispersant, wherein the dispersant has an acid value of 100 to 250 mgKOH/g and a degree of neutralization of 25 to 75%, the content of the organic solvent in the crosslinking raw material mixture is 10 mass % to 40 mass %, and 90 mass % or more, based on the total organic solvent, is an organic solvent having an HSP value δ of 30 to 32.".

In the crosslinking raw material mixture preparation step, the method for mixing the pigment dispersion liquid, the crosslinking agent, and the like is not particularly limited, and known methods may be used, such as agitation with a disperser that is used when additives are mixed into a dispersion liquid in which a pigment has been dispersed in ink production. The temperature during mixing is preferably 5 to 35 °C.

### 1-2-2. Crosslinking agent

The crosslinking agent is preferably a compound having two or more epoxy groups in the molecule (i.e., an epoxy compound having two or more epoxy groups in the molecule). The crosslinking agent is more preferably a compound having 4 to 5 epoxy groups in the molecule. When the crosslinking agent is a compound having two or more epoxy groups in the molecule, the dispersant having an acidic group such as a carboxyl group in the molecule can be crosslinked, thereby suppressing detachment of the dispersant from the pigment surface. When the crosslinking agent is a compound having 4 to 5 epoxy groups in the molecule, the dispersant is crosslinked to form a three-dimensional crosslinked structure, whereby a stronger layer of the crosslinked dispersant covers the surface of the pigment. Thus, the storage stability and pigment dispersibility of the obtained pigment dispersion are further improved, and the color developability, storage stability, ejectability, redispersibility, and the like of an ink containing the pigment dispersion are further improved.

The content of the crosslinking agent in the crosslinking raw material mixture is preferably adjusted such that the degree of crosslinking of the dispersant is 20% to 100%. The content of the crosslinking agent in the crosslinking raw material mixture is more preferably adjusted such that the degree of crosslinking of the dispersant is from 35% to 75%, and particularly preferably adjusted such that the degree of crosslinking of the dispersant is from 50% to 60%. The degree of crosslinking of the dispersant is expressed as a ratio of the number of acidic groups used for crosslinking to the total number of acidic groups (including neutralized acidic groups and non-neutralized acidic groups) contained in the dispersant. Since the content of the crosslinking agent in the crosslinking raw material mixture is within such a range, the effects of crosslinking the dispersant can be more effectively exhibited.

Examples of crosslinking agents include ethylene glycol diglycidyl ether, polyethylene glycol diglycidyl ether, propylene glycol diglycidyl ether, polypropylene glycol diglycidyl ether, sorbitol polyglycidyl ether, glycerol polyglycidyl ether, diglycerol polyglycidyl ether, trimethylolpropane polyglycidyl ether, and polyglycerol polyglycidyl ether. Among these, trimethylolpropane polyglycidyl ether and polyglycerol polyglycidyl ether are particularly preferred.

### 1-2-3. organic solvent

In the method for producing a pigment dispersion according to the present embodiment, the crosslinking raw material mixture contains an organic solvent. In the organic solvent, the "organic solvent having an HSP value δ of 30 to 32" accounts for 90 mass % or more of the organic solvent. When the "organic solvent having an HSP value δ of 30 to 32" is contained in the crosslinking raw material mixture, the dispersant can be made compatible with the organic solvent to an extent that the dispersant does not detach from the pigment surface. Thereby, the mobility of the dispersant can be improved, the frequency of contact between the dispersant and the crosslinking agent can be increased, and the probability of a crosslinking reaction can be increased. When the HSP value δ of the organic solvent is less than 30, the hydrophobicity of the organic solvent becomes excessively high, causing the dispersant to detach from the pigment, which is undesirable. If the HSP value δ of the organic solvent is greater than 32, the hydrophobicity of the organic solvent becomes excessively low. Therefore, the mobility of unneutralized acidic groups of the dispersant in the organic solvent decreases. As a result, the reaction efficiency of the crosslinking reaction decreases, which is undesirable.

The "organic solvent having an HSP value δ of 30 to 32" preferably accounts for 95 mass % or more, and more preferably 100 mass %, of the organic solvent. When the "organic solvent having an HSP value δ of 30 to 32" is less than 95 mass % of the organic solvent, the effect of increasing the probability of the crosslinking reaction is reduced, which is not preferable.

In the method for producing a pigment dispersion according to the present embodiment, the content of the organic solvent in the crosslinking raw material mixture is 10 mass % to 40 mass %. The content of the organic solvent in the crosslinking raw material mixture is preferably 15 mass % to 35 mass %. When the content of the organic solvent in the crosslinking raw material mixture is 10 to 40 mass %, the mobility of the dispersant can be improved, the frequency of contact between the dispersant and the crosslinking agent can be increased, and the probability of the crosslinking reaction can be increased. When the content of the organic solvent is less than 10 mass %, the effect of increasing the likelihood of the above crosslinking reaction is reduced, which is not preferable. When the content of the organic solvent exceeds 40 mass %, the solubility of the dispersant in the solvent increases and the adsorption of the dispersant onto the pigment decreases, which is not preferable.

The HSP value δ is a Hansen solubility parameter (Hansen Solubility Parameters) and is a value used as an index of the solubility of a substance. The intermolecular interaction can be represented by three parameters: a dispersion term (δD), a polar term (δP), and a hydrogen-bonding term (δH). Further, these three parameters and the HSP value δ satisfy the relationship of "δ²=(δD)²+(δP)²+(δH)²". In the present disclosure, the HSP value δ is δ described above. A highly hydrophobic substance has a low polar term (δP) and a low hydrogen-bonding term (δH), and thus tends to have a low HSP value δ. Accordingly, the HSP value δ can be used as an index of the hydrophobicity of a substance. A compound having a low HSP value δ has high hydrophobicity, and a compound having a high HSP value δ has low hydrophobicity. The HSP value δ can be calculated using "Hansen Solubility Parameters software HSPiP (Hansen Solubility Parameters in Practice) ver. 6.0.03".

Examples of organic solvents having an HSP value δ of 30 to 32 include 1,4-butanediol (δ: 33.40), propylene glycol (δ: 31.02), 1,3-propanediol (δ: 30.39), and 1,3-butanediol (δ: 30.39).

Examples of organic solvents usable in combination with an organic solvent having an HSP value δ of 30 to 32 include polyol solvents such as glycerin (δ: 37.42), ethylene glycol (δ: 33.40), 2-methyl-1,3-propanediol (δ: 28.35), 1,2-butanediol (δ: 28.59), 3-methyl-1,3-butanediol (δ: 25.61), 2,3-butanediol (δ: 27.67), 1,2-pentanediol (δ: 26.51), 1,5-pentanediol (δ: 28.58), 3-methyl-1,5-pentanediol (δ: 25.05), 1,2-hexanediol (δ: 26.70), diethylene glycol (δ: 29.17), and dipropylene glycol (δ: 25.36);
glycol ether-based solvents such as propylene glycol monomethyl ether (δ: 22.55), propylene glycol monopropyl ether (δ: 20.53), propylene glycol monobutyl ether (δ: 20.00), diethylene glycol monomethyl ether (δ: 22.62), diethylene glycol monoethyl ether (δ: 21.57), diethylene glycol monopropyl ether (δ: 20.76), and diethylene glycol monobutyl ether (δ: 21.01);
and methoxybutanol-based solvents such as 3-methoxy-1-butanol (δ: 21.64) and 3-methoxy-3-methylbutanol (δ: 19.88).

### 1-2-4. Water

In the method for producing a pigment dispersion according to the present embodiment, the crosslinking raw material mixture contains water. When the crosslinking raw material mixture contains water, the pigment can be dispersed more favorably in the above mixing step. The water is not particularly limited, and examples thereof include deionized water and distilled water.

### 1-2-5. Other Additives

In addition to the above, the crosslinking raw material mixture may contain, as other additives, a surfactant, an antifoaming agent, a preservative, and the like.

### 1-3. Crosslinking step

The crosslinking step is a step of heating the crosslinking raw material mixture to crosslink the dispersant. By this step, the dispersant adhering to the pigment surface is crosslinked by a crosslinking agent, thereby making it possible to inhibit detachment of the dispersant from the pigment surface.

The heating temperature of the crosslinking raw material mixture is preferably 50 °C to 80 °C, more preferably 50 °C to 70 °C, and particularly preferably 50 °C to 60 °C. When the heating temperature is lower than 50 °C, the crosslinking reaction may not proceed sufficiently. When the heating temperature is higher than 80 °C, the dispersant is likely to detach from the pigment surface, the dispersion stability of the pigment decreases, and the pigment particles may aggregate. With respect to heating, the temperature ramp rate from room temperature to 50 °C is preferably in a range of 0.01 °C/min to 1 °C/min, and more preferably in a range of 0.05 °C/min to 0.1 °C/min. By slowly raising the temperature of the crosslinking raw material mixture at a specific rate, an "unneutralized carboxyl group in the dispersant" having high reactivity with the crosslinking agent preferentially reacts with the crosslinking agent. Accordingly, consumption of the crosslinking agent due to a reaction between water or an alcohol and the crosslinking agent can be suppressed. As a result, the dispersant having a crosslinked structure forms a capsule structure that covers the pigment. As a result, the storage stability of the pigment dispersion and the storage stability, storage stability, ejectability, and redispersibility of an ink containing the pigment dispersion are improved.

In the crosslinking step, after the temperature of a crosslinking raw material mixture reaches a final heating temperature, it is preferable to maintain the temperature at that temperature for 2 to 30 hours to allow the crosslinking reaction to proceed, thereby obtaining the pigment dispersion of the present embodiment.

The degree of crosslinking when the dispersant is crosslinked by a crosslinking agent is calculated based on the number of reactive groups of the crosslinking agent relative to the total number of acidic groups (including neutralized acidic groups and non-neutralized acidic groups) in the dispersant. The degree of crosslinking of the dispersant is preferably from 20% to 100%, more preferably from 35% to 75%, and particularly preferably from 50% to 60%. Since the degree of crosslinking of the dispersant is within such a range, a capsule structure that covers the pigment is formed by the dispersant having a crosslinked structure. As a result, the storage stability of the pigment dispersion and the storage stability, storage stability, ejectability, and redispersibility of an ink containing the pigment dispersion are improved. When the degree of crosslinking is less than 20%, the crosslinked structure is insufficient and the dispersant is likely to detach from the pigment surface, thereby making it difficult to achieve the above effects. The degree of crosslinking may be 100%; however, when the degree of crosslinking exceeds 75%, the crosslinking reaction may proceed even at neutralized carboxyl groups in the dispersant. Although such neutralized carboxyl groups have lower reactivity than unneutralized carboxyl groups, they suppress aggregation of pigment particles by electrostatic repulsion and contribute to improving pigment dispersion stability. Accordingly, when the number of neutralized carboxyl groups decreases due to progression of the crosslinking reaction, pigment dispersion stability may decrease. In addition, from the viewpoint of the coating film durability of a coating film formed from an ink containing the obtained pigment dispersion, when the degree of crosslinking is low, the coating film exhibits relatively high coating film durability. In addition, when the degree of crosslinking is high, the coating film durability decreases. Also, when the degree of crosslinking is 35% to 75%, a coating film having excellent coating film durability can be obtained.

### 2. Method for Producing an Ink

In one embodiment of the method for producing an ink according to the present disclosure, a pigment dispersion is prepared by the method for producing a pigment dispersion of the present embodiment, and the obtained pigment dispersion is mixed with other components to prepare an ink. With the method for producing an ink of the present embodiment configured as described above, an ink having favorable color developability, storage stability, ejectability, and coating film durability can be produced.

The other components are not particularly limited, and known components contained in known inks may be used. Examples include resin fine particles, an organic solvent, a surfactant, and water. As used herein, the term "other components" means components other than the pigment dispersion, where the pigment dispersion produced by the method for producing a pigment dispersion of the present embodiment is regarded as one component. Components contained in the pigment dispersion may be additionally added as other components.

### (resin fine particles)

The resin fine particles are not particularly limited, and a known polymerizable compound may be used. The resin fine particles are preferably water-insoluble resin fine particles. The glass transition temperature (Tg) of the resin constituting the resin fine particles is preferably in the range of 40 °C to 100 °C. The glass transition temperature (Tg) can be determined by reading Tg from an endothermic peak obtained when the temperature is increased, using a differential scanning calorimeter (DSC), at a temperature ramp rate of 10 °C/min over a temperature range of -30 °C to 200 °C.

The above water-insoluble resin is capable of accepting ink and exhibits solubility in, or affinity for, the ink. The water-insoluble resin fine particles are inherently water-insoluble; however, in the form of fine particles, the resin can be dispersed in an aqueous medium. The water-insoluble resin fine particles are (i) a water-insoluble resin that can be dispersed in water by forced emulsification using an emulsifier or the like; or (ii) a self-emulsifiable water-insoluble resin that, by introducing a hydrophilic functional group into the molecule, forms a stable aqueous dispersion by itself without using an emulsifier or a dispersion stabilizer. These water-insoluble resin fine particles are usually used in a state of being emulsified and dispersed in water or a water/alcohol mixed solvent.

As used herein, the term "water-insoluble" means that, when water-insoluble resin fine particles are dried at 105 °C for 2 hours and then dissolved in 100 g of water at 25 °C, the amount dissolved is 10 g or less. The above dissolution amount of the water-insoluble resin fine particles is preferably 5 g or less, and more preferably 1 g or less. However, when the water-insoluble resin fine particles have a salt-forming group, the amount dissolved refers to the amount dissolved when the salt-forming group of the resin is 100% neutralized with acetic acid or sodium hydroxide, depending on the type of the salt-forming group.

The resin having a glass transition temperature in a range of 40 to 100 °C is preferably an acrylic resin, a urethane resin, a polyester resin, or a composite resin of a urethane resin and an acrylic resin. The resin is particularly preferably an acrylic resin, a urethane resin, a polyester resin, or a composite resin of a urethane resin and an acrylic resin. The average particle diameter of the resin fine particles formed from these resins is preferably 200 nm or less. More preferably, the average particle diameter is in the range of 50 to 150 nm.

### (organic solvent)

As organic solvents, polyol-based solvents, glycol ether-based solvents, methoxybutanol-based solvents, and the like exemplified in the crosslinking raw material mixture can be used, and two or more thereof can be used in combination. From the viewpoint of ink drying characteristics, the boiling point of the organic solvent is preferably 150 to 250 °C. The content of the organic solvent in the ink is not particularly limited, but is preferably in the range of 10 to 60 mass %.

### (surfactant)

In the method for producing an ink according to the present disclosure, by incorporating a surfactant into the ink, the resulting ink ejection stability can be improved and the spread (dot diameter) of droplets landing on a recording medium can be controlled. The surfactant is not particularly limited. When the ink contains an anionic compound as another component, the surfactant is preferably an anionic, nonionic, or betaine-type surfactant.

In the present disclosure, the following surfactants are preferably used. Examples of preferred surfactants include a fluorine-based surfactant or a silicone-based surfactant, each having a high ability to reduce static surface tension. In addition, examples of preferred surfactants include anionic surfactants such as dioctyl sulfosuccinate, which has a high ability to reduce dynamic surface tension. Examples of preferred surfactants include relatively low-molecular-weight polyoxyethylene alkyl ethers, polyoxyethylene alkylphenyl ethers, acetylene glycols, and Pluronic-type surfactants (Pluronic^{®} is a registered trademark). Examples of preferred surfactants include nonionic surfactants such as sorbitan derivatives. It is also preferable to use, in combination, a fluorine-based or silicone-based surfactant and a surfactant having a high ability to reduce dynamic surface tension.

The content of the surfactant in the ink is not particularly limited, but is preferably in the range of 0.1 to 5.0 mass %.

### (Water)

The water contained in the ink according to the present disclosure is not particularly limited, and deionized water, distilled water, or the like may be used.

### (Others)

In the method for producing an ink of the present embodiment, in addition to those described above, various known additives may be appropriately selected, as necessary, and incorporated into the ink according to the intended purpose of improving performance. Examples of such performance characteristics include ejection stability, compatibility with a print head and/or an ink cartridge, storage stability, image storage stability, and other performance characteristics. Examples of the known additives include polysaccharides, viscosity modifiers, specific-resistance modifiers, film-forming agents, ultraviolet absorbers, a preservative, and the like.

The viscosity of the ink obtained by the method for producing an ink of the present disclosure is preferably from 1 to 40 mPa·s at 25 °C, and more preferably from 2 to 10 mPa·s.

In the method for producing an ink of the present disclosure, the pigment dispersion of the present embodiment and the other components described above may be mixed to prepare a mixture, and the mixture may be used as the ink; however, it is preferable to filter the resulting mixture through a predetermined filter to obtain the ink. When the pigment dispersion and the other components are mixed, the order of mixing is not particularly limited.
[Examples] The present disclosure will be described in detail below with reference to Examples; however, the present disclosure is not limited thereto. In the following Examples, operations were performed at room temperature (25 °C) unless otherwise specified. Unless otherwise specified, "%" and "parts" mean "mass %" and "parts by mass", respectively.

### [Examples 1-66, Comparative Examples 1-13] < Synthesis of Pigment-Dispersing Resin A1 >

A monomer mixture was prepared by mixing 62 parts of acrylic acid, 129 parts of styrene, and 9 parts of α-methylstyrene. A reaction vessel was charged with 20 parts of methyl ethyl ketone, 0.3 parts of 2-mercaptoethanol (a polymerization chain transfer agent), and 10% of the monomer mixture, followed by sufficiently purging the vessel with nitrogen gas. Separately, a dropping funnel was charged with a mixture comprising the remainder of the monomer mixture (i.e., 90% of the prepared monomer mixture), 0.27 parts of the polymerization chain transfer agent, 60 parts of methyl ethyl ketone, and 2.2 parts of an azo-based radical polymerization initiator. Then, under a nitrogen atmosphere, the monomer mixture in the reaction vessel was heated to 65 °C with stirring, and the mixture in the dropping funnel was added dropwise over 3 hours. As an azo-based radical polymerization initiator, V-65 (trade name), namely, 2,2'-azobis(2,4-dimethylvaleronitrile) (compound name), manufactured by FUJIFILM Wako Pure Chemical Industries, Ltd., was used. After 2 hours had elapsed at 65 °C from completion of the dropwise addition, a solution prepared by dissolving 0.3 parts of the polymerization initiator in 5 parts of methyl ethyl ketone was added, and the mixture was further aged at 65 °C for 2 hours and at 70 °C for 2 hours. Thereafter, the solvent was completely removed by drying under reduced pressure to obtain a pigment-dispersing resin A1. The acid value of the pigment-dispersing resin A1 is calculated to be 241 mg KOH/g from the charging ratio of the starting monomers. The pigment-dispersing resin A1 is a compound having an acidic group (a carboxyl group).

### < Synthesis of pigment-dispersing resin A2 >

A pigment-dispersing resin A2 was obtained in the same manner as in the preparation of the pigment-dispersing resin A1, except that the amounts of monomers to be mixed were changed as follows. Pigment-dispersing resin A2 is a compound having an acidic group (carboxyl group). The acid value of pigment-dispersing resin A2 is calculated to be 257 mg KOH/g from the charge ratio of the starting monomers.
acrylic acid: 66 parts
styrene: 125 parts
α-methylstyrene: 9 parts

### < Preparation of dispersant solution B1 >

A mixture of 30 parts of XJ-130 (an acrylic pigment-dispersing resin, manufactured by Seiko PMC Corporation, having an acid value of 60 mg KOH/g), 0.96 parts of sodium hydroxide, and 69.04 parts of deionized water was mixed and heated with stirring at 80 °C for 5 hours to obtain dispersant solution B1 having a resin solids content of 30 mass %. The degree of neutralization of dispersant solution B1 is calculated to be 75%. XJ-130 is a compound having a carboxyl group.

### < Preparation of dispersant solutions B2 to B19 >

Dispersant solutions B2 to B19 were obtained in the same manner as in the preparation of dispersant solution B1, except that the type of the pigment-dispersing resin and the amounts of sodium hydroxide and water were changed as shown in Table 1 below.

### [Table 1]

**TABLE I**

| DISPERSANT SOLUTION | NaOH (MASS %) | DEIONIZED WATER (MASS %) | PIGMENT-DISPERSING RESIN | | | DEGREE OF NEUTRALIZATION OF THE DISPERSANT (%) |
|---|---|---|---|---|---|---|
| | | | TYPE | ACID VALUE (mgKOH/g) | CONTENT RATIO (MASS %) | |
| B1 | 0.96 | 69.04 | XJ-130 | 60 | 30 | 75 |
| B2 | 0.47 | 69.53 | XJ-110 | 110 | 30 | 20 |
| B3 | 0.59 | 69.41 | XJ-110 | 110 | 30 | 25 |
| B4 | 0.94 | 69.06 | XJ-110 | 110 | 30 | 40 |
| B5 | 1.06 | 68.94 | XJ-110 | 110 | 30 | 45 |
| B6 | 1.18 | 68.82 | XJ-110 | 110 | 30 | 50 |
| B7 | 1.29 | 68.71 | XJ-110 | 110 | 30 | 55 |
| B8 | 1.41 | 68.59 | XJ-110 | 110 | 30 | 60 |
| B9 | 1.76 | 68.24 | XJ-110 | 110 | 30 | 75 |
| B10 | 1.88 | 68.12 | XJ-110 | 110 | 30 | 80 |
| B11 | 2.03 | 67.97 | XJ-120 | 190 | 30 | 50 |
| B12 | 2.44 | 67.56 | XJ-120 | 190 | 30 | 60 |
| B13 | 3.05 | 66.95 | XJ-120 | 190 | 30 | 75 |
| B14 | 2.14 | 67.86 | XJ-290 | 200 | 30 | 50 |
| B15 | 3.21 | 66.79 | XJ-290 | 200 | 30 | 75 |
| B16 | 2.58 | 67.42 | PIGMENT-DISPERSING RESIN A1 | 241 | 30 | 50 |
| B17 | 3.09 | 66.91 | PIGMENT-DISPERSING RESIN A1 | 241 | 30 | 60 |
| B18 | 3.87 | 66.13 | PIGMENT-DISPERSING RESIN A1 | 241 | 30 | 75 |
| B19 | 4.12 | 65.88 | PIGMENT-DISPERSING RESIN A2 | 257 | 30 | 75 |

Details of the pigment-dispersing resins (compounds having an acidic group) shown in Table 1 are as follows. Each of XJ-110, XJ-120, and XJ-290 is a compound having a carboxyl group.
- XJ-110 (acrylic pigment-dispersing resin manufactured by Seiko PMC Corporation; acid value: 110 mg KOH/g)
- XJ-120 (acrylic pigment-dispersing resin manufactured by Seiko PMC Corporation, acid value: 190 mg KOH/g)
- XJ-290 (acrylic pigment-dispersing resin manufactured by Seiko PMC Corporation, acid value 200 mg KOH/g)

### < Preparation of pigment dispersion liquid C1 >

A mixture containing 25 parts of PALIOTOL YELLOW D1116J (Pigment Yellow 155, manufactured by DIC Corporation), 25 parts of dispersant solution B1, and 50 parts of deionized water was stirred for 30 minutes and then dispersed using a bead mill charged with 50 vol% of 0.3 mm zirconia beads, thereby obtaining a pigment dispersion liquid C1 having a pigment concentration of 25 mass %.

Pigment dispersion liquids C2 to C22 were obtained in the same manner as in the preparation of pigment dispersion liquid C1, except that the type of the dispersant solution and the amounts of propylene glycol and water were changed as shown in Table 2 below.

### [Table 2]

**TABLE II**

| PIGMENT DISPERSION LIQUID | PALIOTOL YELLOW D1116J (MASS %) | DISPERSANT SOLUTION | | | PG (MASS %) | DEIONIZED WATER (MASS %) | DEGREE OF NEUTRALIZATION OF THE DISPERSANT (%) |
|---|---|---|---|---|---|---|---|
| | | TYPE | DISPERSING RESIN | MASS % | | | |
| C1 | 25 | B1 | XJ-130 | 25 | - | 50 | 75 |
| C2 | 25 | B2 | XJ-110 | 25 | - | 50 | 20 |
| C3 | 25 | B3 | XJ-110 | 25 | - | 50 | 25 |
| C4 | 25 | B4 | XJ-110 | 25 | - | 50 | 40 |
| C5 | 25 | B5 | XJ-110 | 25 | - | 50 | 45 |
| C6 | 25 | B6 | XJ-110 | 25 | - | 50 | 50 |
| C7 | 25 | B7 | XJ-110 | 25 | - | 50 | 55 |
| C8 | 25 | B8 | XJ-110 | 25 | - | 50 | 60 |
| C9 | 25 | B9 | XJ-110 | 25 | - | 50 | 75 |
| C10 | 25 | B10 | XJ-110 | 25 | - | 50 | 80 |
| C11 | 25 | B11 | XJ-120 | 25 | - | 50 | 50 |
| C12 | 25 | B12 | XJ-120 | 25 | - | 50 | 60 |
| C13 | 25 | B13 | XJ-120 | 25 | - | 50 | 75 |
| C14 | 25 | B14 | XJ-290 | 25 | - | 50 | 50 |
| C15 | 25 | B15 | XJ-290 | 25 | - | 50 | 75 |
| C16 | 25 | B16 | PIGMENT-DISPERSING RESIN A1 | 25 | - | 50 | 50 |
| C17 | 25 | B17 | PIGMENT-DISPERSING RESIN A1 | 25 | - | 50 | 60 |
| C18 | 25 | B18 | PIGMENT-DISPERSING RESIN A1 | 25 | - | 50 | 75 |
| C19 | 25 | B19 | PIGMENT-DISPERSING RESIN A2 | 25 | - | 50 | 75 |
| C20 | 25 | B9 | XJ-110 | 25 | 20 | 30 | 75 |
| C21 | 25 | B18 | PIGMENT-DISPERSING RESIN A1 | 25 | 20 | 30 | 75 |
| C22 | 25 | B16 | PIGMENT-DISPERSING RESIN A1 | 25 | 50 | 0 | 50 |

< Preparation of Pigment Dispersion D1 > 50 parts of pigment dispersion liquid C9, 10 parts of propylene glycol, 1.029 parts of Denacol EX-321LT (an epoxy crosslinking agent manufactured by Nagase ChemteX Corporation; epoxy equivalent: 140 g/eq.; number of epoxy groups per molecule: a mixture of 2 and 3), and 38.971 parts of deionized water were mixed and stirred for 30 minutes to obtain a crosslinking raw material mixture d1. The obtained crosslinking raw material mixture d1 was heated from room temperature to 60 °C at a temperature ramp rate of 0.5 °C/min and then heated for 16 hours, thereby obtaining a pigment dispersion D1 having a pigment concentration of 12.5 mass % (Example 1). The degree of crosslinking of pigment dispersion D1 is calculated to be 100%.

### < Preparation of Pigment Dispersions D2 to D78 >

Crosslinking raw material mixtures d2 to d78 were prepared, and pigment dispersions D2 to D78 were obtained (Examples 2 to 66 and Comparative Examples 1 to 12) in the same manner as in the preparation of pigment dispersion D1, except that the types and blending amounts of the pigment dispersion liquid, the organic solvent, and the crosslinking agent, the blending amount of deionized water, and the temperature ramp rate were changed as shown in Tables 3 to 10 below.

### [Table 3]

**TABLE III**

| CROSSLINKING RAW MATERIAL MIXTURE | PIGMENT DISPERSION LIQUID (PIGMENT CONCENTRATION 25%) | | ORGANIC SOLVENT | | CROSSLINKING AGENT | | | DEIONIZED WATER (MASS %) |
|---|---|---|---|---|---|---|---|---|
| | | | TYPE | CONTENT RATIO (MASS %) | EX-321 | EX-512 | EX-521 | |
| | TYPE | MASS % | | | | | | |
| d1 | C9 | 50 | PG | 10 | 1.029 | - | - | 38.971 |
| d2 | C13 | 50 | PG | 10 | 1.778 | - | - | 38.222 |
| d3 | C15 | 50 | PG | 10 | 1.871 | - | - | 38.129 |
| d4 | C18 | 50 | PG | 10 | 2.255 | - | - | 37.745 |
| d5 | C3 | 50 | PG | 10 | 1.029 | - | - | 38.971 |
| d6 | C4 | 50 | PG | 10 | 1.029 | - | - | 38.971 |
| d7 | C5 | 50 | PG | 10 | 1.029 | - | - | 38.971 |
| d8 | C6 | 50 | PG | 10 | 1.029 | - | - | 38.971 |
| d9 | C7 | 50 | PG | 10 | 1.029 | - | - | 38.971 |
| d10 | C8 | 50 | PG | 10 | 1.029 | - | - | 38.971 |
| d11 | C9 | 50 | BDO | 10 | 1.029 | - | - | 38.971 |
| d12 | C9 | 50 | PG | 9 | 1.029 | - | - | 38.971 |
| | | | DEG | 1 | | | | |
| d13 | C9 | 50 | PG | 9 | 1.029 | - | - | 38.971 |
| | | | EG | 1 | | | | |
| d14 | C9 | 50 | PG | 15 | 1.029 | - | - | 33.971 |
| d15 | C9 | 50 | PG | 25 | 1.029 | - | - | 23.971 |
| d16 | C9 | 50 | PG | 35 | 1.029 | - | - | 13.971 |
| d17 | C9 | 50 | PG | 40 | 1.029 | - | - | 8.971 |
| d18 | C9 | 50 | PG | 10 | - | 1.235 | - | 38.765 |
| d19 | C9 | 50 | PG | 10 | - | - | 1.345 | 38.655 |
| d20 | C9 | 50 | PG | 10 | 1.029 | - | - | 38.971 |
| d21 | C9 | 50 | PG | 10 | 1.029 | - | - | 38.971 |
| d22 | C8 | 50 | PG | 10 | - | 1.235 | - | 38.765 |
| d23 | C9 | 50 | PG | 10 | - | 1.235 | - | 38.765 |
| d24 | C8 | 50 | PG | 10 | 1.029 | - | - | 38.971 |
| d25 | C8 | 50 | PG | 10 | - | 1.235 | - | 38.765 |
| d26 | C8 | 50 | PG | 10 | - | - | 1.345 | 38.655 |
| d27 | C6 | 50 | PG | 10 | - | 1.235 | - | 38.765 |
| d28 | C13 | 50 | PG | 10 | - | 2.133 | - | 37.867 |
| d29 | C11 | 50 | PG | 10 | - | 2.133 | - | 37.867 |
| d30 | C12 | 50 | PG | 10 | - | 2.133 | - | 37.867 |

### [Table 4]

**TABLE IV**

| CROSSLINKING RAW MATERIAL MIXTURE | PIGMENT DISPERSION LIQUID (PIGMENT CONCENTRATION 25%) | | ORGANIC SOLVENT | | CROSSLINKING AGENT | | | DEIONIZED WATER (MASS %) |
|---|---|---|---|---|---|---|---|---|
| | | | TYPE | CONTENT RATIO (MASS %) | EX-321 | EX-512 | EX-521 | |
| | TYPE | MASS % | | | | | | |
| d31 | C13 | 50 | PG | 10 | - | 2.133 | - | 37.867 |
| d32 | C12 | 50 | PG | 10 | 1.778 | - | - | 38.222 |
| d33 | C12 | 50 | PG | 10 | 1.778 | - | - | 38.222 |
| d34 | C13 | 50 | PG | 10 | 1.778 | - | - | 38.222 |
| d35 | C12 | 50 | PG | 10 | - | 2.133 | - | 37.867 |
| d36 | C11 | 50 | PG | 10 | - | 2.133 | - | 37.867 |
| d37 | C11 | 50 | PG | 10 | - | - | 2.324 | 37.676 |
| d38 | C14 | 50 | PG | 10 | - | 2.246 | - | 37.754 |
| d39 | C17 | 50 | PG | 10 | 2.255 | - | - | 37.745 |
| d40 | C18 | 50 | PG | 10 | - | 2.706 | - | 37.294 |
| d41 | C18 | 50 | PG | 10 | 2.255 | - | - | 37.745 |
| d42 | C17 | 50 | PG | 10 | 2.255 | - | - | 37.745 |
| d43 | C17 | 50 | PG | 10 | - | 2.706 | - | 37.294 |
| d44 | C18 | 50 | PG | 10 | - | 2.706 | - | 37.294 |
| d45 | C17 | 50 | PG | 10 | - | 2.706 | - | 37.294 |
| d46 | C17 | 50 | PG | 10 | - | - | 2.948 | 37.052 |
| d47 | C16 | 50 | PG | 10 | - | 2.706 | - | 37.294 |
| d48 | C16 | 50 | PG | 15 | - | 2.706 | - | 32.294 |
| d49 | C16 | 50 | PG | 25 | - | 2.706 | - | 22.294 |
| d50 | C16 | 50 | PG | 35 | - | 2.706 | - | 12.294 |
| d51 | C16 | 50 | PG | 40 | - | 2.706 | - | 7.294 |
| d52 | C16 | 50 | PG | 25 | - | 0.406 | - | 24.594 |
| d53 | C16 | 50 | PG | 25 | - | 0.541 | - | 24.459 |
| d54 | C16 | 50 | PG | 25 | - | 0.812 | - | 24.188 |
| d55 | C16 | 50 | PG | 25 | - | 0.947 | - | 24.053 |
| d56 | C16 | 50 | PG | 25 | - | 1.218 | - | 23.782 |
| d57 | C16 | 50 | PG | 25 | - | 1.353 | - | 23.647 |
| d58 | C16 | 50 | PG | 25 | - | 1.624 | - | 23.376 |
| d59 | C16 | 50 | PG | 25 | - | - | 1.769 | 23.231 |
| d60 | C16 | 50 | PG | 25 | - | 1.759 | - | 23.241 |

### [Table 5]

**TABLE V**

| CROSSLINKING RAW MATERIAL MIXTURE | PIGMENT DISPERSION LIQUID (PIGMENT CONCENTRATION 25%) | | ORGANIC SOLVENT | | CROSSLINKING AGENT | | | DEIONIZED WATER (MASS %) |
|---|---|---|---|---|---|---|---|---|
| | | | TYPE | CONTENT RATIO (MASS %) | EX-321 | EX-512 | EX-521 | |
| | TYPE | MASS % | | | | | | |
| d61 | C16 | 50 | PG | 25 | - | 2.029 | - | 22.971 |
| d62 | C16 | 50 | PG | 25 | - | 2.165 | - | 22.835 |
| d63 | C20 | 50 | PG | 10 | 1.029 | - | - | 48.971 |
| d64 | C21 | 50 | PG | 10 | - | 2.706 | - | 47.294 |
| d65 | C22 | 50 | PG | 25 | - | 1.353 | - | 48.647 |
| d66 | C22 | 50 | PG | 25 | - | - | 1.474 | 48.526 |
| d67 | C1 | 50 | PG | 10 | 0.561 | - | - | 39.439 |
| d68 | C19 | 50 | PG | 10 | 2.405 | - | - | 37.595 |
| d69 | C2 | 50 | PG | 10 | 1.029 | - | - | 38.971 |
| d70 | C10 | 50 | PG | 10 | 1.029 | - | - | 38.971 |
| d71 | C9 | 50 | DPG | 10 | 1.029 | - | - | 38.971 |
| d72 | C9 | 50 | DEG | 10 | 1.029 | - | - | 38.971 |
| d73 | C9 | 50 | - | - | 1.029 | - | - | 48.971 |
| d74 | C9 | 50 | EG | 10 | 1.029 | - | - | 38.971 |
| d75 | C9 | 50 | PG | 8.5 | 1.029 | - | - | 38.971 |
| | | | DEG | 1.5 | | | | |
| d76 | C9 | 50 | PG | 8.5 | 1.029 | - | - | 38.971 |
| | | | EG | 1.5 | | | | |
| d77 | C9 | 50 | PG | 5 | 1.029 | - | - | 43.971 |
| d78 | C9 | 50 | PG | 45 | 1.029 | - | - | 3.971 |
| d79 | C9 | 55.56 | - | - | 1.144 | - | - | 43.301 |

### [Table 6]

**TABLE VI**

| | PIGMENT DISPERSION | ORGANIC SOLVENT IN A CROSSLINKING RAW MATERIAL MIXTURE | | STEP OF ADDING AN ORGANIC SOLVENT | DISPERSANT | | CROSSLINKING AGENT | DEGREE OF CROSSLINKING (%) | TEMPERATURE RAMP RATE (°C/ MIN) |
|---|---|---|---|---|---|---|---|---|---|
| | | | | | ACID VALUE (mgKOH/g) | DEGREE OF NEUTRAU-ZATION (%) | | | |
| | | TYPE | MASS % | | | | | | |
| EXAMPLE 1 | D1 | PG | 10 | CROSSLINKING RAW MATERIAL MIXTURE PREPARATION STEP | 110 | 75 | EX-321LT | 100 | 0.5 |
| EXAMPLE 2 | D2 | PG | 10 | CROSSLINKING RAW MATERIAL MIXTURE PREPARATION STEP | 190 | 75 | EX-321LT | 100 | 0.5 |
| EXAMPLE 3 | D3 | PG | 10 | CROSSLINKING RAW MATERIAL MIXTURE PREPARATION STEP | 200 | 75 | EX-321LT | 100 | 0.5 |
| EXAMPLE 4 | D4 | PG | 10 | CROSSLINKING RAW MATERIAL MIXTURE PREPARATION STEP | 241 | 75 | EX-321LT | 100 | 0.5 |
| EXAMPLE 5 | D5 | PG | 10 | CROSSLINKING RAW MATERIAL MIXTURE PREPARATION STEP | 110 | 25 | EX-321LT | 100 | 0.5 |
| EXAMPLE 6 | D6 | PG | 10 | CROSSLINKING RAW MATERIAL MIXTURE PREPARATION STEP | 110 | 40 | EX-321LT | 100 | 0.5 |
| EXAMPLE 7 | D7 | PG | 10 | CROSSLINKING RAW MATERIAL MIXTURE PREPARATION STEP | 110 | 45 | EX-321LT | 100 | 0.5 |
| EXAMPLE 8 | D8 | PG | 10 | CROSSLINKING RAW MATERIAL MIXTURE PREPARATION STEP | 110 | 50 | EX-321LT | 100 | 0.5 |
| EXAMPLE 9 | D9 | PG | 10 | CROSSLINKING RAW MATERIAL MIXTURE PREPARATION STEP | 110 | 55 | EX-321LT | 100 | 0.5 |
| EXAMPLE 10 | D10 | PG | 10 | CROSSLINKING RAW MATERIAL MIXTURE PREPARATION STEP | 110 | 60 | EX-321LT | 100 | 0.5 |
| EXAMPLE 11 | D11 | BDO | 10 | CROSSLINKING RAW MATERIAL MIXTURE PREPARATION STEP | 110 | 75 | EX-321LT | 100 | 0.5 |
| EXAMPLE 12 | D12 | PG | 9 | CROSSLINKING RAW MATERIAL MIXTURE PREPARATION STEP | 110 | 75 | EX-321LT | 100 | 0.5 |
| | | DEG | 1 | | | | | | |
| EXAMPLE 13 | D13 | PG | 9 | CROSSLINKING RAW MATERIAL MIXTURE PREPARATION STEP | 110 | 75 | EX-321LT | 100 | 0.5 |
| | | EG | 1 | | | | | | |
| EXAMPLE 14 | D14 | PG | 15 | CROSSLINKING RAW MATERIAL MIXTURE PREPARATION STEP | 110 | 75 | EX-321LT | 100 | 0.5 |
| EXAMPLE 15 | D15 | PG | 25 | CROSSLINKING RAW MATERIAL MIXTURE PREPARATION STEP | 110 | 75 | EX-321LT | 100 | 0.5 |
| EXAMPLE 16 | D16 | PG | 35 | CROSSLINKING RAW MATERIAL MIXTURE PREPARATION STEP | 110 | 75 | EX-321LT | 100 | 0.5 |

### [Table 7]

**TABLE VII**

| | PIGMENT DISPERSION | ORGANIC SOLVENT IN A CROSSLINKING RAW MATERIAL MIXTURE | | STEP OF ADDING AN ORGANIC SOLVENT | DISPERSANT | | CROSSLINKING AGENT | DEGREE OF CROSSLINKING (%) | TEMPERATURE RAMP RATE (°C/MIN) |
|---|---|---|---|---|---|---|---|---|---|
| | | | | | ACID VALUE (mgKOH/g) | DEGREE OF NEUTRALIZATION (%) | | | |
| | | TYPE | MASS % | | | | | | |
| EXAMPLE 17 | D17 | PG | 40 | CROSSLINKING RAW MATERIAL MIXTURE PREPARATION STEP | 110 | 75 | EX-321LT | 100 | 0.5 |
| EXAMPLE 18 | D18 | PG | 10 | CROSSLINKING RAW MATERIAL MIXTURE PREPARATION STEP | 110 | 75 | EX-512 | 100 | 0.5 |
| EXAMPLE 19 | D19 | PG | 10 | CROSSLINKING RAW MATERIAL MIXTURE PREPARATION STEP | 110 | 75 | EX-521 | 100 | 0.5 |
| EXAMPLE 20 | D20 | PG | 10 | CROSSLINKING RAW MATERIAL MIXTURE PREPARATION STEP | 110 | 75 | EX-321LT | 100 | 0.08 |
| EXAMPLE 21 | D21 | PG | 10 | CROSSLINKING RAW MATERIAL MIXTURE PREPARATION STEP | 110 | 75 | EX-321LT | 100 | 0.12 |
| EXAMPLE 22 | D22 | PG | 10 | CROSSLINKING RAW MATERIAL MIXTURE PREPARATION STEP | 110 | 60 | EX-512 | 100 | 0.5 |
| EXAMPLE 23 | D23 | PG | 10 | CROSSLINKING RAW MATERIAL MIXTURE PREPARATION STEP | 110 | 75 | EX-512 | 100 | 0.08 |
| EXAMPLE 24 | D24 | PG | 10 | CROSSLINKING RAW MATERIAL MIXTURE PREPARATION STEP | 110 | 60 | EX-321LT | 100 | 0.08 |
| EXAMPLE 25 | D25 | PG | 10 | CROSSLINKING RAW MATERIAL MIXTURE PREPARATION STEP | 110 | 60 | EX-512 | 100 | 0.08 |
| EXAMPLE 26 | D26 | PG | 10 | CROSSLINKING RAW MATERIAL MIXTURE PREPARATION STEP | 110 | 60 | EX-521 | 100 | 0.08 |
| EXAMPLE 27 | D27 | PG | 10 | CROSSLINKING RAW MATERIAL MIXTURE PREPARATION STEP | 110 | 50 | EX-512 | 100 | 0.08 |
| EXAMPLE 28 | D28 | PG | 10 | CROSSLINKING RAW MATERIAL MIXTURE PREPARATION STEP | 190 | 75 | EX-512 | 100 | 0.5 |
| EXAMPLE 29 | D29 | PG | 10 | CROSSLINKING RAW MATERIAL MIXTURE PREPARATION STEP | 190 | 50 | EX-512 | 100 | 0.5 |
| EXAMPLE 30 | D30 | PG | 10 | CROSSLINKING RAW MATERIAL MIXTURE PREPARATION STEP | 190 | 60 | EX-512 | 100 | 0.5 |
| EXAMPLE 31 | D31 | PG | 10 | CROSSLINKING RAW MATERIAL MIXTURE PREPARATION STEP | 190 | 75 | EX-512 | 100 | 0.08 |
| EXAMPLE 32 | D32 | PG | 10 | CROSSLINKING RAW MATERIAL MIXTURE PREPARATION STEP | 190 | 60 | EX-321LT | 100 | 0.08 |

### [Table 8]

**TABLE VIII**

| | PIGMENT DISPERSION | ORGANIC SOLVENT IN A CROSSLINKING RAW MATERIAL MIXTURE | | STEP OF ADDING AN ORGANIC SOLVENT | DISPERSANT | | CROSSLINKING AGENT | DEGREE OF CROSSLINKING (%) | TEMPERATURE RAMP RATE (°C/MIN) |
|---|---|---|---|---|---|---|---|---|---|
| | | | | | ACID VALUE (mgKOH/g) | DEGREE OF NEUTRALIZATION (%) | | | |
| | | TYPE | MASS % | | | | | | |
| EXAMPLE 33 | D33 | PG | 10 | CROSSLINKING RAW MATERIAL MIXTURE PREPARATION STEP | 190 | 60 | EX-321LT | 100 | 0.5 |
| EXAMPLE 34 | D34 | PG | 10 | CROSSLINKING RAW MATERIAL MIXTURE PREPARATION STEP | 190 | 75 | EX-321LT | 100 | 0.08 |
| EXAMPLE 35 | D35 | PG | 10 | CROSSLINKING RAW MATERIAL MIXTURE PREPARATION STEP | 190 | 60 | EX-512 | 100 | 0.08 |
| EXAMPLE 36 | D36 | PG | 10 | CROSSLINKING RAW MATERIAL MIXTURE PREPARATION STEP | 190 | 60 | EX-512 | 100 | 0.08 |
| EXAMPLE 37 | D37 | PG | 10 | CROSSLINKING RAW MATERIAL MIXTURE PREPARATION STEP | 190 | 50 | EX-521 | 100 | 0.08 |
| EXAMPLE 38 | D38 | PG | 10 | CROSSUNKING RAW MATERIAL MIXTURE PREPARATION STEP | 200 | 50 | EX-512 | 100 | 0.08 |
| EXAMPLE 39 | D39 | PG | 10 | CROSSLINKING RAW MATERIAL MIXTURE PREPARATION STEP | 241 | 60 | EX-321LT | 100 | 0.5 |
| EXAMPLE 40 | D40 | PG | 10 | CROSSLINKING RAW MATERIAL MIXTURE PREPARATION STEP | 241 | 75 | EX-512 | 100 | 0.5 |
| EXAMPLE 41 | D41 | PG | 10 | CROSSLINKING RAW MATERIAL MIXTURE PREPARATION STEP | 241 | 75 | EX-321LT | 100 | 0.08 |
| EXAMPLE 42 | D42 | PG | 10 | CROSSLINKING RAW MATERIAL MIXTURE PREPARATION STEP | 241 | 60 | EX-321LT | 100 | 0.08 |
| EXAMPLE 43 | D43 | PG | 10 | CROSSLINKING RAW MATERIAL MIXTURE PREPARATION STEP | 241 | 60 | EX-512 | 100 | 0.5 |
| EXAMPLE 44 | D44 | PG | 10 | CROSSLINKING RAW MATERIAL MIXTURE PREPARATION STEP | 241 | 75 | EX-512 | 100 | 0.08 |
| EXAMPLE 45 | D45 | PG | 10 | CROSSLINKING RAW MATERIAL MIXTURE PREPARATION STEP | 241 | 60 | EX-512 | 100 | 0.08 |
| EXAMPLE 46 | D46 | PG | 10 | CROSSLINKING RAW MATERIAL MIXTURE PREPARATION STEP | 241 | 60 | EX-521 | 100 | 0.08 |
| EXAMPLE 47 | D47 | PG | 10 | CROSSLINKING RAW MATERIAL MIXTURE PREPARATION STEP | 241 | 50 | EX-512 | 100 | 0.08 |
| EXAMPLE 48 | D48 | PG | 15 | CROSSLINKING RAW MATERIAL MIXTURE PREPARATION STEP | 241 | 50 | EX-512 | 100 | 0.08 |

### [Table 9]

**TABLE IX**

| | PIGMENT DISPERSION | ORGANIC SOLVENT IN A CROSSLINKING RAW MATERIAL MIXTURE | | STEP OF ADDING AN ORGANIC SOLVENT | DISPERSANT | | CROSSLINKING AGENT | DEGREE OF CROSSLINKING (%) | TEMPERATURE RAMP RATE (°C/MIN) |
|---|---|---|---|---|---|---|---|---|---|
| | | | | | ACID VALUE (mgKOH/g) | DEGREE OF NEUTRALIZATION (\) | | | |
| | | TYPE | MASS % | | | | | | |
| EXAMPLE 49 | D49 | PG | 25 | CROSSLINKING RAW MATERIAL MIXTURE PREPARATION STEP | 241 | 50 | EX-512 | 100 | 0.08 |
| EXAMPLE 50 | D50 | PG | 35 | CROSSLINKING RAW MATERIAL MIXTURE PREPARATION STEP | 241 | 50 | EX-512 | 100 | 0.08 |
| EXAMPLE 51 | D51 | PG | 40 | CROSSLINKING RAW MATERIAL MIXTURE PREPARATION STEP | 241 | 50 | EX-512 | 100 | 0.08 |
| EXAMPLE 52 | D52 | PG | 25 | CROSSLINKING RAW MATERIAL MIXTURE PREPARATION STEP | 241 | 50 | EX-512 | 15 | 0.08 |
| EXAMPLE 53 | D53 | PG | 25 | CROSSLINKING RAW MATERIAL MIXTURE PREPARATION STEP | 241 | 50 | EX-512 | 20 | 0.08 |
| EXAMPLE 54 | D54 | PG | 25 | CROSSLINKING RAW MATERIAL MIXTURE PREPARATION STEP | 241 | 50 | EX-512 | 30 | 0.08 |
| EXAMPLE 55 | D55 | PG | 25 | CROSSLINKING RAW MATERIAL MIXTURE PREPARATION STEP | 241 | 50 | EX-512 | 35 | 0.08 |
| EXAMPLE 56 | D56 | PG | 25 | CROSSLINKING RAW MATERIAL MIXTURE PREPARATION STEP | 241 | 50 | EX-512 | 45 | 0.08 |
| EXAMPLE 57 | D57 | PG | 25 | CROSSLINKING RAW MATERIAL MIXTURE PREPARATION STEP | 241 | 50 | EX-512 | 50 | 0.08 |
| EXAMPLE 58 | D58 | PG | 25 | CROSSLINKING RAW MATERIAL MIXTURE PREPARATION STEP | 241 | 50 | EX-512 | 60 | 0.08 |
| EXAMPLE 59 | D59 | PG | 25 | CROSSLINKING RAW MATERIAL MIXTURE PREPARATION STEP | 241 | 50 | EX-521 | 60 | 0.08 |
| EXAMPLE 60 | D60 | PG | 25 | CROSSLINKING RAW MATERIAL MIXTURE PREPARATION STEP | 241 | 50 | EX-512 | 65 | 0.08 |
| EXAMPLE 61 | D61 | PG | 25 | CROSSLINKING RAW MATERIAL MIXTURE PREPARATION STEP | 241 | 50 | EX-512 | 75 | 0.08 |
| EXAMPLE 62 | D62 | PG | 25 | CROSSLINKING RAW MATERIAL MIXTURE PREPARATION STEP | 241 | 50 | EX-512 | 80 | 0.08 |
| EXAMPLE 63 | D63 | PG | 10 | STEP OF PREPARING A PIGMENT DISPERSION LIQUID | 110 | 75 | EX-321LT | 100 | 0.5 |
| EXAMPLE 64 | D64 | PG | 10 | STEP OF PREPARING A PIGMENT DISPERSION LIQUID | 241 | 75 | EX-512 | 100 | 0.08 |

### [Table 10]

**TABLE X**

| | PIGMENT DISPERSION | ORGANIC SOLVENT IN A CROSSLINKING RAW MATERIAL MIXTURE | | STEP OF ADDING AN ORGANIC SOLVENT | DISPERSANT | | CROSSLINKING AGENT | DEGREE OF CROSSLINKING (%) | TEMPERATURE RAMP RATE (°C/MIN) |
|---|---|---|---|---|---|---|---|---|---|
| | | | | | ACID VALUE (mgKOH/g) | DEGREE OF NEUTRALIZATION (%) | | | |
| | | TYPE | MASS % | | | | | | |
| EXAMPLE 65 | D65 | PG | 25 | STEP OF PREPARING A PIGMENT DISPERSION LIQUID | 241 | 50 | EX-512 | 50 | 0.08 |
| EXAMPLE 66 | D66 | PG | 25 | STEP OF PREPARING A PIGMENT DISPERSION LIQUID | 241 | 50 | EX-521 | 50 | 0.08 |
| COMPARATIVE EXAMPLE 1 | D67 | PG | 10 | CROSSLINKING RAW MATERIAL MIXTURE PREPARATION STEP | 60 | 75 | EX-321LT | 100 | 0.5 |
| COMPARATIVE EXAMPLE 2 | D68 | PG | 10 | CROSSLINKING RAW MATERIAL MIXTURE PREPARATION STEP | 257 | 75 | EX-321LT | 100 | 0.5 |
| COMPARATIVE EXAMPLE 3 | D69 | PG | 10 | CROSSLINKING RAW MATERIAL MIXTURE PREPARATION STEP | 110 | 20 | EX-321LT | 100 | 0.5 |
| COMPARATIVE EXAMPLE 4 | D70 | PG | 10 | CROSSLINKING RAW MATERIAL MIXTURE PREPARATION STEP | 110 | 80 | EX-321LT | 100 | 0.5 |
| COMPARATIVE EXAMPLE 5 | D71 | DPG | 10 | CROSSLINKING RAW MATERIAL MIXTURE PREPARATION STEP | 110 | 75 | EX-321LT | 100 | 0.5 |
| COMPARATIVE EXAMPLE 6 | D72 | DEG | 10 | CROSSLINKING RAW MATERIAL MIXTURE PREPARATION STEP | 110 | 75 | EX-321LT | 100 | 0.5 |
| COMPARATIVE EXAMPLE 7 | D73 | - | - | - | 110 | 75 | EX-321LT | 100 | 0.5 |
| COMPARATIVE EXAMPLE 8 | D74 | EG | 10 | CROSSLINKING RAW MATERIAL MIXTURE PREPARATION STEP | 110 | 75 | EX-321LT | 100 | 0.5 |
| COMPARATIVE EXAMPLE 9 | D75 | PG | 8.5 | CROSSLINKING RAW MATERIAL MIXTURE PREPARATION STEP | 110 | 75 | EX-321LT | 100 | 0.5 |
| | | DEG | 1.5 | | | | | | |
| COMPARATIVE EXAMPLE 10 | D76 | PG | 8.5 | CROSSLINKING RAW MATERIAL MIXTURE PREPARATION STEP | 110 | 75 | EX-321LT | 100 | 0.5 |
| | | EG | 1.5 | | | | | | |
| COMPARATIVE EXAMPLE 11 | D77 | PG | 5 | CROSSLINKING RAW MATERIAL MIXTURE PREPARATION STEP | 110 | 75 | EX-321LT | 100 | 0.5 |
| COMPARATIVE EXAMPLE 12 | D78 | PG | 45 | CROSSLINKING RAW MATERIAL MIXTURE PREPARATION STEP | 110 | 75 | EX-321LT | 100 | 0.5 |
| COMPARATIVE EXAMPLE 13 | D79 | PG | 10 | AFTER THE CROSSLINKING STEP | 110 | 75 | EX-321LT | 100 | 0.5 |

Details of the raw materials listed in Tables 3 to 10 are as follows.

### < organic solvent >

- DPG: dipropylene glycol (HSP value δ: 25.36)
- DEG: diethylene glycol (HSP value δ: 29.17)
- BDO: 1,3-butanediol (HSP value δ: 30.39)
- PG: propylene glycol (HSP value δ: 31.02) • EG: ethylene glycol (HSP value δ: 33.40)

### < crosslinking agent >

- Denacol EX-321LT (an epoxy crosslinking agent manufactured by Nagase ChemteX Corporation; epoxy equivalent: 140 g/eq.; number of epoxy groups in a molecule: a mixture of 2 and 3; hereinafter referred to as EX-321LT)
- Denacol EX-512 (an epoxy crosslinking agent manufactured by Nagase ChemteX Corporation; epoxy equivalent weight: 168 g/eq.; number of epoxy groups per molecule: 4; hereinafter abbreviated as EX-512)
- Denacol EX-521 (an epoxy crosslinking agent manufactured by Nagase ChemteX Corporation, epoxy equivalent: 183 g/eq., number of epoxy groups in a molecule: 5, hereinafter abbreviated as EX-521)

In the field for the step of adding an organic solvent, both the pigment dispersing step and the crosslinking raw material mixture preparation step are performed before the crosslinking step. The pigment dispersing step is performed before the crosslinking raw material mixture preparation step. The degree of crosslinking is the degree to which the dispersant is crosslinked by the crosslinking agent.

### < Preparation of crosslinked pigment dispersion liquid D79 >

Pigment dispersion liquid C9 (55.56 parts), EX-321LT (1.144 parts), and deionized water (43.301 parts) were mixed and stirred for 30 minutes to obtain a crosslinking raw material mixture d79. The obtained crosslinking raw material mixture d79 was heated from room temperature to 60 °C at a temperature ramp rate of 0.5 °C/min, and, after heating for 24 hours from the start of the temperature ramp, was cooled to room temperature. Then, 10 parts of propylene glycol were added to obtain a pigment dispersion D79 having a pigment concentration of 12.5 mass % (Comparative Example 13). The degree of crosslinking of the pigment dispersion D79 is calculated to be 100%.

The following evaluations were performed using the prepared pigment dispersions D1 to D79. The evaluation results are as shown in Tables 11 to 15.

### [Table 11]

**TABLE XI**

| | **PIGMENT DISPERSION** | **EVALUATION 1: STORAGE STABILITY OF THE PIGMENT DISPERSION** | **EVALUATION 2: COLOR DEVELOPABILITY OF THE INK** | **EVALUATION 3: STORAGE STABILITY OF THE INK** | **EVALUATION 4: REDISPERSIBILITY OF THE INK** | **EVALUATION 5: INK STANDBY EJECTION STABILITY** | **EVALUATION 6: INK WATER RESISTANCE** | **EVALUATION 7: EtOH RESISTANCE OF THE INK** |
|---|---|---|---|---|---|---|---|---|
| **EXAMPLE 1** | **D1** | **C** | **A** | **C** | **C** | **C** | **B** | **C** |
| **EXAMPLE 2** | **D2** | **B** | **A** | **C** | **B** | **C** | **B** | **C** |
| **EXAMPLE 3** | **D3** | **B** | **A** | **C** | **A** | **B** | **B** | **C** |
| **EXAMPLE 4** | **D4** | **B** | **A** | **C** | **A** | **B** | **B** | **C** |
| **EXAMPLE 5** | **D5** | **C** | **C** | **C** | **C** | **C** | **A** | **C** |
| **EXAMPLE 6** | **D6** | **B** | **B** | **B** | **C** | **C** | **A** | **C** |
| **EXAMPLE 7** | **D7** | **B** | **A** | **B** | **C** | **C** | **A** | **C** |
| **EXAMPLE 8** | **D8** | **B** | **A** | **B** | **C** | **C** | **A** | **C** |
| **EXAMPLE 9** | **D9** | **B** | **A** | **B** | **C** | **C** | **A** | **C** |
| **EXAMPLE 10** | **D10** | **B** | **A** | **B** | **C** | **C** | **B** | **C** |
| **EXAMPLE 11** | **D11** | **C** | **A** | **C** | **C** | **C** | **B** | **C** |
| **EXAMPLE 12** | **D12** | **C** | **A** | **C** | **C** | **C** | **B** | **C** |
| **EXAMPLE 13** | **D13** | **C** | **A** | **C** | **C** | **C** | **B** | **C** |
| **EXAMPLE 14** | **D14** | **B** | **A** | **C** | **C** | **C** | **B** | **C** |
| **EXAMPLE 15** | **D15** | **B** | **A** | **C** | **C** | **C** | **B** | **C** |
| **EXAMPLE 16** | **D16** | **B** | **A** | **C** | **C** | **C** | **B** | **C** |

### [Table 12]

**TABLE XII**

| | **PIGMENT DISPERSION** | **EVALUATION 1: STORAGE STABILITY OF THE PIGMENT DISPERSION** | **EVALUATION 2: COLOR DEVELOPABILITY OF THE INK** | **EVALUATION 3: STORAGE STABILITY OF THE INK** | **EVALUATION 4: REDISPERSIBILITY OF THE INK** | **EVALUATION 5: INK STANDBY EJECTION STABILITY** | **EVALUATION 6: INK WATER RESISTANCE** | **EVALUATION 7: EtOH RESISTANCE OF THE INK** |
|---|---|---|---|---|---|---|---|---|
| **EXAMPLE 17** | **D17** | **C** | **A** | **C** | **C** | **C** | **B** | **C** |
| **EXAMPLE 18** | **D18** | **B** | **A** | **C** | **B** | **C** | **B** | **C** |
| **EXAMPLE 19** | **D19** | **B** | **A** | **C** | **B** | **C** | **B** | **C** |
| **EXAMPLE 20** | **D20** | **B** | **A** | **C** | **B** | **C** | **B** | **C** |
| **EXAMPLE 21** | **D21** | **C** | **A** | **C** | **C** | **C** | **B** | **C** |
| **EXAMPLE 22** | **D22** | **B** | **A** | **B** | **B** | **B** | **B** | **C** |
| **EXAMPLE 23** | **D23** | **B** | **A** | **B** | **B** | **B** | **B** | **C** |
| **EXAMPLE 24** | **D24** | **B** | **A** | **B** | **B** | **B** | **B** | **C** |
| **EXAMPLE 25** | **D25** | **A** | **A** | **B** | **B** | **B** | **B** | **C** |
| **EXAMPLE 26** | **D26** | **A** | **A** | **B** | **B** | **B** | **B** | **C** |
| **EXAMPLE 27** | **D27** | **A** | **A** | **B** | **B** | **B** | **A** | **C** |
| **EXAMPLE 28** | **D28** | **B** | **A** | **C** | **A** | **B** | **B** | **C** |
| **EXAMPLE 29** | **D29** | **A** | **A** | **C** | **A** | **B** | **A** | **C** |
| **EXAMPLE 30** | **D30** | **A** | **A** | **C** | **A** | **B** | **B** | **C** |
| **EXAMPLE 31** | **D31** | **B** | **A** | **B** | **A** | **B** | **B** | **C** |
| **EXAMPLE 32** | **D32** | **B** | **A** | **B** | **A** | **B** | **B** | **C** |

### [Table 13]

**TABLE XIII**

| | **PIGMENT DISPERSION** | **EVALUATION 1: STORAGE STABILITY OF THE PIGMENT DISPERSION** | **EVALUATION 2: COLOR DEVELOPABILITY OF THE INK** | **EVALUATION 3: STORAGE STABILITY OF THE INK** | **EVALUATION 4: REDISPERSIBILITY OF THE INK** | **EVALUATION 5: INK STANDBY EJECTION STABILITY** | **EVALUATION 6: INK WATER RESISTANCE** | **EVALUATION 7: EtOH RESISTANCE OF THE INK** |
|---|---|---|---|---|---|---|---|---|
| **EXAMPLE 33** | **D33** | **C** | **A** | **B** | **A** | **B** | **B** | **C** |
| **EXAMPLE 34** | **D34** | **C** | **A** | **B** | **A** | **B** | **B** | **C** |
| **EXAMPLE 35** | **D35** | **A** | **A** | **B** | **A** | **A** | **B** | **C** |
| **EXAMPLE 36** | **D36** | **A** | **A** | **B** | **B** | **A** | **A** | **C** |
| **EXAMPLE 37** | **D37** | **A** | **A** | **B** | **B** | **A** | **A** | **C** |
| **EXAMPLE 38** | **D38** | **A** | **A** | **A** | **A** | **A** | **A** | **C** |
| **EXAMPLE 39** | **D39** | **B** | **A** | **B** | **A** | **B** | **B** | **C** |
| **EXAMPLE 40** | **D40** | **B** | **A** | **B** | **A** | **B** | **B** | **C** |
| **EXAMPLE 41** | **D41** | **B** | **A** | **B** | **A** | **B** | **B** | **C** |
| **EXAMPLE 42** | **D42** | **A** | **A** | **B** | **A** | **A** | **B** | **C** |
| **EXAMPLE 43** | **D43** | **A** | **A** | **B** | **A** | **A** | **B** | **C** |
| **EXAMPLE 44** | **D44** | **A** | **A** | **B** | **A** | **A** | **B** | **C** |
| **EXAMPLE 45** | **D45** | **A** | **A** | **A** | **A** | **A** | **B** | **C** |
| **EXAMPLE 46** | **D46** | **A** | **A** | **A** | **A** | **A** | **B** | **C** |
| **EXAMPLE 47** | **D47** | **A** | **A** | **A** | **A** | **A** | **A** | **C** |
| **EXAMPLE 48** | **D48** | **AA** | **A** | **A** | **A** | **A** | **A** | **C** |

### [Table 14]

**TABLE XIV**

| | **PIGMENT DISPERSION** | **EVALUATION 1: STORAGE STABILITY OF THE PIGMENT DISPERSION** | **EVALUATION 2: COLOR DEVELOPABILITY OF THE INK** | **EVALUATION 3: STORAGE STABILITY OF THE INK** | **EVALUATION 4. REDISPERSIBILITY OF THE INK** | **EVALUATION 5: INK STANDBY EJECTION STABILITY** | **EVALUATION 6: INK WATER RESISTANCE** | **EVALUATION 7: EtOH RESISTANCE OF THE INK** |
|---|---|---|---|---|---|---|---|---|
| **EXAMPLE 49** | **D49** | **AA** | **A** | **A** | **A** | **A** | **A** | **C** |
| **EXAMPLE 50** | **D50** | **AA** | **A** | **A** | **A** | **A** | **A** | **C** |
| **EXAMPLE 51** | **D51** | **A** | **A** | **A** | **A** | **A** | **A** | **C** |
| **EXAMPLE 52** | **D52** | **A** | **A** | **A** | **B** | **B** | **A** | **A** |
| **EXAMPLE 53** | **D53** | **A** | **A** | **A** | **A** | **B** | **A** | **A** |
| **EXAMPLE 54** | **D54** | **A** | **A** | **A** | **A** | **B** | **A** | **A** |
| **EXAMPLE 55** | **D55** | **A** | **A** | **A** | **A** | **A** | **A** | **A** |
| **EXAMPLE 56** | **D56** | **A** | **A** | **A** | **A** | **A** | **A** | **A** |
| **EXAMPLE 57** | **D57** | **AA** | **A** | **AA** | **A** | **A** | **A** | **A** |
| **EXAMPLE 58** | **D58** | **AA** | **A** | **AA** | **A** | **A** | **A** | **A** |
| **EXAMPLE 59** | **D59** | **AA** | **A** | **AA** | **A** | **A** | **A** | **A** |
| **EXAMPLE 60** | **D60** | **AA** | **A** | **A** | **A** | **A** | **A** | **B** |
| **EXAMPLE 61** | **D61** | **AA** | **A** | **A** | **A** | **A** | **A** | **B** |
| **EXAMPLE 62** | **D62** | **AA** | **A** | **A** | **A** | **A** | **A** | **C** |
| **EXAMPLE 63** | **D63** | **C** | **A** | **C** | **C** | **C** | **B** | **C** |
| **EXAMPLE 64** | **D64** | **A** | **A** | **A** | **A** | **A** | **B** | **C** |

### [Table 15]

**TABLE XV**

| | **PIGMENT DISPERSION** | **EVALUATION 1: STORAGE STABILITY OF THE PIGMENT DISPERSION** | **EVALUATION 2: COLOR DEVELOPABILITY OF THE INK** | **EVALUATION 3: STORAGE STABILITY OF THE INK** | **EVALUATION 4: REDISPERSIBILITY OF THE INK** | **EVALUATION 5: INK STANDBY EJECTION STABILITY** | **EVALUATION 6: INK WATER RESISTANCE** | **EVALUATION 7: EtOH RESISTANCE OF THE INK** |
|---|---|---|---|---|---|---|---|---|
| **EXAMPLE 65** | **D65** | **AA** | **A** | **AA** | **A** | **A** | **A** | **A** |
| **EXAMPLE 66** | **D66** | **AA** | **A** | **AA** | **A** | **A** | **A** | **A** |
| **COMPARATIVE EXAMPLE 1** | **D67** | **C** | **A** | **C** | **D** | **D** | **B** | **C** |
| **COMPARATIVE EXAMPLE 2** | **D68** | **B** | **A** | **C** | **A** | **B** | **C** | **D** |
| **COMPARATIVE EXAMPLE 3** | **D69** | **C** | **D** | **D** | **D** | **D** | **A** | **C** |
| **COMPARATIVE EXAMPLE 4** | **D70** | **C** | **A** | **C** | **C** | **C** | **C** | **D** |
| **COMPARATIVE EXAMPLE 5** | **D71** | **C** | **A** | **D** | **C** | **D** | **B** | **C** |
| **COMPARATIVE EXAMPLE 6** | **D72** | **C** | **A** | **C** | **C** | **D** | **B** | **C** |
| **COMPARATIVE EXAMPLE 7** | **D73** | **C** | **A** | **D** | **C** | **D** | **B** | **C** |
| **COMPARATIVE EXAMPLE 8** | **D74** | **C** | **A** | **C** | **C** | **D** | **B** | **C** |
| **COMPARATIVE EXAMPLE 9** | **D75** | **C** | **A** | **C** | **C** | **D** | **B** | **C** |
| **COMPARATIVE EXAMPLE 10** | **D76** | **C** | **A** | **C** | **C** | **D** | **B** | **C** |
| **COMPARATIVE EXAMPLE 11** | **D77** | **C** | **A** | **C** | **C** | **D** | **B** | **C** |
| **COMPARATIVE EXAMPLE 12** | **D78** | **C** | **A** | **C** | **C** | **D** | **B** | **C** |
| **COMPARATIVE EXAMPLE 13** | **D79** | **C** | **A** | **C** | **C** | **D** | **B** | **C** |

### < Evaluation 1: Evaluation of storage stability of a pigment dispersion >

The viscosities of pigment dispersions D1 to D79 were measured using an E-type viscometer (TP-200E, manufactured by Toki Sangyo Co., Ltd.; cone rotor: 1°34' × R24) at 25 °C and at a rotational speed of 10 rpm. The pigment dispersion was placed in a sealed container, stored in a constant-temperature chamber at 70 °C for 4 weeks, and then measured again for viscosity using the above-described apparatus; the viscosity change of the pigment dispersion before and after heated storage was calculated to evaluate the storage stability of the pigment dispersion. The criteria are as follows, and ratings of AA, A, B, and C are within a practically usable range.
AA: The viscosity change rate before and after heat storage is less than +2.5%
A: The viscosity change rate before and after heated storage is not less than ±2.5% and less than ±5%
B: The viscosity change rate before and after heated storage is not less than +5% but less than ±7.5%
C: The viscosity change rate before and after heated storage is not less than ±7.5% and less than ±10%
D: the viscosity change rate before and after heat storage is ±10% or more

### < Evaluation 2: Evaluation of ink color developability >

Inks were prepared as follows using pigment dispersions D1 to D79.
pigment dispersion: 32.0 parts by mass
TAKELAC W-6010 (polyurethane resin manufactured by Mitsui Chemicals, Inc., resin solids content: 30%): 33.3 parts by mass
propylene glycol: 13.0 parts by mass
3-Butanediol: 13.0 parts
SURFYNOL 104PG50 (acetylenic diol-based surfactant, manufactured by Evonik Operations GmbH): 0.5 parts by mass
TEGO Wet 250 (a polyether-modified siloxane copolymer, manufactured by Evonik Operations GmbH): 1.0 parts by mass.
PROXEL GXL (S): (preservative manufactured by Archroma): 0.1 parts by mass
Deionized water: 7.1 parts by mass.

The prepared ink was applied to coated paper (OK Top Coat+, manufactured by Oji Paper Co., Ltd.; basis weight: 104.7 g) using a wire-wound coating bar having a wet coating film thickness of 6.9 µm, and dried for 3 minutes in an air oven at 70 °C. The reflection density of the coated sample was measured to evaluate the color developability of the ink. The reflective density was measured using a spectrodensitometer FD-7 (light source: D50; viewing angle: 2°; Status E) manufactured by Konica Minolta, Inc. The criteria are as set forth below, and
ratings A, B, and C for evaluation are within a practically usable range.
A: a reflection density of 1.38 or more
B: a reflection density of 1.35 or more and less than 1.38
C: a reflection density of 1.32 or more and less than 1.35
D: a reflection density of less than 1.32

### < Evaluation 3: Evaluation of ink storage stability >

The viscosity of inks using pigment dispersions D1 to D79 prepared in Evaluation 2 was measured using an E-type viscometer (TP-200E, manufactured by Toki Sangyo Co., Ltd.; cone rotor: 1°34' × R24) at 25 °C and a rotational speed of 20 rpm. The ink was placed in a sealed container and stored in a constant-temperature chamber at 70 °C for four weeks. Thereafter, the viscosity was measured again using the above-described apparatus, and a change in viscosity (before and after heated storage) was calculated to evaluate the storage stability of the ink. The criteria are as follows, and ratings of AA, A, B, and C are within a practically usable range.
AA: The viscosity change rate before and after heat storage is less than ±2.5%
A: The viscosity change rate before and after heated storage is not less than ±2.5% and less than ±5%
B: The viscosity change rate before and after heated storage is not less than ±5% but less than ±7.5%
C: The viscosity change rate before and after heated storage is not less than ±7.5% and less than ±10%
D: the viscosity change rate before and after heat storage is ±10% or more

### < Evaluation 4: Evaluation of ink redispersibility >

Twenty-five µL of an ink using pigment dispersions D1 to D79 prepared in Evaluation 2 was measured into a polystyrene Petri dish (Aznol Petri dish, As One Corporation; 55 mm in diameter; 17 mm in overall height), and the ink was dried by heating in an air oven at 35 °C for up to 60 minutes without a lid. Thereafter, 8 mL of deionized water was added to the Petri dish removed from the air oven, and the mixture was stirred for 30 minutes using a magnetic stirrer. The extent of dispersion of the ink in the deionized water was then confirmed to evaluate the redispersibility of the ink. The criteria are as follows, and ratings of A, B, and C are within a practically usable range.
A: After drying for 60 minutes, all of the ink is redispersed in water.
B: After drying for 40 minutes, all of the ink is redispersible in water; however, after drying for 60 minutes, some ink remains that is not redispersible in water.
C: After drying for 20 minutes, all of the ink is redispersed in water; however, after drying for 40 minutes, some ink remains that is not redispersed in water.
D: After drying for 20 minutes, some ink remains that does not redisperse in water.

### < Evaluation 5: Evaluation of Standby Ink Ejection Stability >

An independently driven inkjet head (360 npi, 6 pL droplet volume, 1024 nozzles) manufactured by Konica Minolta, Inc. was filled with inks prepared using pigment dispersions D1 to D79 obtained in Evaluation 2 in an environment of 35 °C and 30% RH, and it was confirmed, using a strobe-synchronized droplet observation apparatus, that the ink was normally ejected from 256 nozzles used for evaluation. Thereafter, the ink was allowed to stand for 60 minutes without ejecting the ink. Thereafter, the standby ejection stability of the ink was evaluated by confirming the number of abnormal ejection nozzles when the ink was ejected. The criteria are as follows, and ratings A, B, and C are within a practically usable range.
A: All nozzles exhibit normal ejection.
B: One or two abnormal ejection nozzles are observed.
C: Three to four abnormal ejection nozzles are observed.
D: Five or more abnormal ejection nozzles are observed.

### < Evaluation 6: Evaluation of Ink Water Resistance >

An ink using the pigment dispersions D1 to D79 prepared in Evaluation 2 was applied to a corona-treated surface of a PET film (FE2001, manufactured by Futamura Chemical Co., Ltd.; thickness: 50 µm) using a wire-wound coating bar having a wet coating film thickness of 9.1 µm, and then dried in an air oven at 80 °C for 10 minutes. An ink-coated article was rubbed under the following conditions using a Gakushin-type rubbing fastness tester "AB-301" manufactured by Tester Sangyo Co., Ltd..
Test load: 200 gf
Rubbing member: a white cotton cloth wetted with water (Canakin No. 3)
Number of reciprocations: 10

After rubbing, the extent of ink peeling from the PET film and the degree of staining of the white cotton cloth serving as the rubbing member were visually observed to evaluate the water resistance of the ink. The criteria are as follows, and ratings A, B, and C fall within a practically usable range.
A: No ink peeling was observed, and no staining of the white cotton cloth was observed.
B: No ink peeling was observed, but staining of the white cotton cloth was observed.
C: The area in which the ink peels off is less than 20% of the total area.
D: The area in which the ink peels off is 20% or more of the total area.

### < Evaluation 7: Evaluation of Ink Resistance to Ethanol (EtOH) >

The ink-coated article was rubbed in the same manner as in the rubbing test of Evaluation 6, except that the rubbing member was changed to a white cotton cloth (Kanakin No. 3) wetted with a 40% aqueous ethanol solution, and the number of reciprocating cycles was changed to five. The degree of ink peeling from the PET film was visually observed to evaluate the ethanol resistance of the ink. The criteria are as follows, and ratings of AA, A, B, and C are within a practically usable range.
A: No peeling was observed.
B: Peeling is observed, but the peeled area is less than 10% of the total area.
C: The peeled area is 10% or more and less than 20% of the total area.
D: The peeled area is 20% or more of the total area.

When the pigment dispersions of the Examples and the Comparative Examples, and the inks prepared using the respective pigment dispersions, were compared, the Examples exhibited favorable results in terms of the storage stability of the pigment dispersion and the color developability, storage stability, ejectability, redispersibility, and coating film durability of the ink. In contrast, each Comparative Example had evaluation results indicating problems in practical use.

According to the present disclosure, a method for producing a pigment dispersion having good storage stability can be provided. Further, according to the present disclosure, there is provided a method for producing an ink having good color developability, storage stability, ejectability, and coating film durability.

According to the present embodiment, a method for producing a pigment dispersion having good storage stability can be provided. Further, the present disclosure provides a method for producing an ink having good color developability, storage stability, ejectability, and coating film durability.

Although the mechanism by which the effects of the present embodiment are exhibited, or the mechanism of action, has not been clarified, the following is presumed.

In the method for producing a pigment dispersion according to the present embodiment, because the pigment is dispersed using a dispersant having a specific acid value and a specific degree of neutralization, it is presumed that the dispersant can maintain appropriate dispersibility while having unneutralized carboxyl groups that preferentially react with a crosslinking agent. Accordingly, it is presumed that the resulting pigment dispersion is excellent in storage stability, and that the resulting ink is excellent in storage stability, ejectability, and redispersibility. In addition, it is presumed that the coating film durability of a coating film formed from the resulting ink is also improved.

In addition, it is presumed that, by additionally using a specific amount of an organic solvent having a specific Hansen solubility parameter (HSP) value (δ) during the crosslinking step, the dispersant becomes compatible with the solvent to an extent that the dispersant does not detach from the pigment surface, thereby improving mobility. Thus, it is presumed that the likelihood of contact and reaction between uncrosslinked carboxyl groups in the dispersant and a crosslinking agent is increased. Thus, it is presumed that a capsule structure is formed in which the pigment is tightly covered with a dispersant having a crosslinked structure. As a result, it is presumed that a pigment dispersion having good storage stability is obtained, and further, that using the pigment dispersion yields an ink having good color developability, storage stability, ejectability, redispersibility, and coating film durability.

Although embodiments of the present invention have been described and illustrated in detail, the disclosed embodiments are provided for purposes of illustration and example only and not for limitation. The scope of the present invention should be construed in accordance with the terms of the appended claims.

## Claims

1. A method for producing a pigment dispersion, the method comprising:
a pigment dispersing step (S01) of mixing at least a pigment, a dispersant, and water and dispersing the pigment to obtain a pigment dispersion liquid;
a crosslinking raw material mixture preparation step (S02) of: (i) when the pigment dispersion liquid does not contain an organic solvent, preparing a crosslinking raw material mixture by mixing at least the pigment dispersion liquid, an organic solvent, and a crosslinking agent; and (ii) when the pigment dispersion liquid contains an organic solvent, preparing a crosslinking raw material mixture by mixing at least the pigment dispersion liquid and a crosslinking agent; and
a crosslinking step (S03) of heating the crosslinking raw material mixture to crosslink the dispersant, wherein
the dispersant has an acid value of 100 to 250 mg KOH/g and a degree of neutralization of 25% to 75%,
a content of the organic solvent in the crosslinking raw material mixture is 10 mass % to 40 mass %, and 90 mass % or more of the total organic solvent is an organic solvent having an HSP value δ of 30 to 32.

2. The method for producing the pigment dispersion according to claim 1, wherein the crosslinking agent is a compound having 4 to 5 epoxy groups in the molecule.

3. The method for producing the pigment dispersion according to claim 1, wherein the dispersant has an acid value of 150 to 250 mg KOH/g.

4. The method for producing the pigment dispersion according to claim 1, wherein the dispersant has an acid value of 200 to 250 mg KOH/g.

5. The method for producing the pigment dispersion according to claim 1, wherein the dispersant has a degree of neutralization of 35% to 65%.

6. The method for producing the pigment dispersion according to claim 1, wherein a heating temperature in the crosslinking step is 50 to 80 °C and a temperature ramp rate is 0.1 °C/min or less.

7. A method for producing an ink, the method comprising:
producing a pigment dispersion by the method for producing the pigment dispersion according to any one of claims 1 to 6; and
mixing the obtained pigment dispersion and other components to prepare an ink.
